(19) Europäisches Patentamt / European Patent Office / Office européen des brevets

(11) **EP 4 643 990 A1**

(12) **EUROPEAN PATENT APPLICATION**
published in accordance with Art. 153(4) EPC

(43) Date of publication:
**05.11.2025 Bulletin 2025/45**

(21) Application number: 23911993.6

(22) Date of filing: **22.12.2023**

(51) International Patent Classification (IPC):
**B01J 20/34** (2006.01)   **B01J 20/26** (2006.01)
**B01J 20/30** (2006.01)   **B09B 3/00** (2022.01)
**B09B 3/70** (2022.01)   **B29B 17/02** (2006.01)
**B09B 101/67** (2022.01)

(52) Cooperative Patent Classification (CPC):
**B01J 20/26; B01J 20/30; B01J 20/34; B09B 3/00;
B09B 3/70; B29B 17/02;** B09B 2101/67;
Y02W 30/62

(86) International application number:
**PCT/JP2023/046205**

(87) International publication number:
**WO 2024/143213 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022   JP 2022212137
             28.12.2022   JP 2022212138
             09.06.2023   JP 2023095750

(71) Applicant: **Nippon Shokubai Co., Ltd.
Osaka-shi, Osaka 541-0043 (JP)**

(72) Inventors:
• **TORII, Kazushi**
  **Himeji-shi, Hyogo 671-1282 (JP)**
• **KOBAYASHI, Nobuhiro**
  **Himeji-shi, Hyogo 671-1282 (JP)**
• **MATSUI, Daisuke**
  **Himeji-shi, Hyogo 671-1282 (JP)**
• **YAMADA, Yozo**
  **Fukuoka-shi, Fukuoka 812-0881 (JP)**
• **YASUMURA, Yoshiyuki**
  **Tokyo 141-0031 (JP)**

(74) Representative: **Schön, Christoph
  Dr. Schön, Neymeyr & Partner mbB
  Bavariaring 26
  80336 München (DE)**

(54) **METHOD FOR PRODUCING RECYCLED WATER-ABSORBENT RESIN, AND METHOD FOR ASSESSING PRODUCTION CONDITIONS IN SAID PRODUCTION METHOD**

(57)   Provided is a method for producing a recycled water-absorbent resin, the method including a dehydration step (1) of treating a used water-absorbent resin with a polyvalent metal salt; an acid treatment step (2) of treating, with an acidic substance, the water-absorbent resin treated with the polyvalent metal salt; a water washing step (3) of washing with water the water-absorbent resin treated with the acidic substance; a neutralization step (4) of neutralizing, with an alkali metal salt, the water-absorbent resin washed with water; and a drying step (5) of drying the water-absorbent resin neutralized with the alkali metal salt. Through the production method, a recycled water-absorbent resin having water absorption performance such as water absorbency that more closely approaches the water absorption performance of the water-absorbent resin before use can be produced from a used water-absorbent resin.

FIG. 1

**Description**

Technical Field

The present invention relates to a method for producing a recycled water-absorbent resin, and a method for determining production conditions in the production method.

Background Art

Usually, an absorbent article contains not only a water-absorbent resin but also a large amount of a pulp component for the purpose of aiding in the absorption of excreta and the like. At present, most used absorbent articles are incinerated. However, from the viewpoints of resource protection and environmental protection, the pulp component and/or the water-absorbent resin contained in a used absorbent article is desirably separated and recovered to produce a recycled pulp component and/or a recycled water-absorbent resin, and these recycled materials are desirably reused.

As an existing method for separating and recovering a pulp component and a water-absorbent polymer from a used absorbent article, for example, a method described in Patent Document 1 is known, the method including a step of disaggregating a used absorbent article (sanitary article) and dispersing the disaggregated article in water, and a step of separating and recovering a pulp component (fibers) and a water-absorbent polymer (water-absorbent resin) contained in the absorbent article.

Meanwhile, the water-absorbent resin contained in the used absorbent article described in Patent Document 1 has reduced water absorption performance. Therefore, in order to reuse the water-absorbent resin as a recycled water-absorbent resin, the water-absorbent resin must be recycled in a manner in which the absorption performance thereof is restored.

Examples of known methods for recycling the water-absorbent resin and producing a recycled water-absorbent resin include the following methods.

· A method in which a dehydration treatment step, an acid treatment step, and an alkali treatment step are carried out in this order, the dehydration treatment step including adding a transition metal salt alone or a mixture of a transition metal salt and an alkali metal salt or an alkaline earth metal salt to a dispersion of a water-absorbent resin obtained from a used absorbent article (Patent Document 2).
· A method in which a water-absorbent resin obtained from a used absorbent article is subjected to an operation of placing the water-absorbent resin in an environment for discharging an absorbed liquid to be absorbed, the operation being selected from an operation of changing the pH of the water-absorbent resin, an operation of changing the temperature of the water-absorbent resin, and an operation of bringing the water-absorbent resin into contact with a hydrophilic organic solvent (Patent Document 3).
· A method that includes a step of treating a water-absorbent resin obtained from a used absorbent article with an aqueous solution of a polyvalent metal salt, and a step of treating the water-absorbent resin treated with the aqueous solution of a polyvalent metal salt with an aqueous solution of an alkali metal salt (Patent Document 4).
· A method that includes a step of deactivating a water-absorbent resin obtained from a used absorbent article with an acid, a step of adding an alkali metal ion supply source to the water-absorbent resin deactivated with the acid, thereby forming a highly water-absorbent recycled polymer in a wet state, and a step of drying the highly water-absorbent recycled polymer in the wet state (Patent Document 5).

Among the methods described above, the method described in Patent Document 2 in particular has the potential to be adapted to systems that are operated by the existing methods described in Patent Document 1 and the like, and practical application thereof is anticipated soon.

Citation List

Patent Document

Patent Document 1: JP 2013-150976 A
Patent Document 2: JP 2003-225645 A
Patent Document 3: JP 2003-326161 A
Patent Document 4: JP 2013-198862 A
Patent Document 5: JP 2019-135046 A

Summary of Invention

Technical Problem

However, in the method described in Patent Document 2, there is room for improvement in terms of restoring the water absorption performance such as the water absorbency of the recycled water-absorbent resin to be produced. Thus, an object of the present invention is to produce, from a water-absorbent resin contained in a used absorbent article, a recycled water-absorbent resin for which the water absorption performance such as water absorbency is further restored, and which more closely approaches, in terms of the water absorption performance such as water absorbency, the water-absorbent resin contained in the absorbent article prior to use.

In general, the water-absorbent resin obtained from a used absorbent article and recovered as a raw material for a recycled water-absorbent resin differs with each absorbent article in terms of the content of the absorbed liquid such as excreta and/or the content of the water-absorbent resin. Furthermore, in the method described in Patent Document 2, the used absorbent article that is to be subjected to the method may be directly subjected as is to the dehydration step, and in this case, the content of the water-absorbent resin in the used absorbent article may be high or low depending on each lot to be processed, and is not stable. Therefore, in the known methods described above, it is difficult to determine production conditions, for example, the required addition amount of an agent to be used, such as the acid used in the acid treatment step described above. Accordingly, a problem with the above-described known methods is that when the addition amount of the agent is less than the required amount, the restoration of the water absorption performance of the water-absorbent resin becomes insufficient, and the water absorption performance of the resultant recycled water-absorbent resin may be reduced. Another problem with the above-mentioned known methods is that when the addition amount of the agent is excessive with respect to the required amount, the cost is increased more than necessary, and the water absorption performance of the recycled water-absorbent resin may be reduced.

Thus, another object of the present invention is to provide a method for producing a recycled water-absorbent resin and a method for determining production conditions in the method for producing a recycled water-absorbent resin, whereby the amount of an additive (such as the above-mentioned acid) to be used in a treatment in the method for producing the recycled water-absorbent resin is determined even when the content of the water-absorbent resin contained in a used absorbent article is unclear, and as a result, water absorption performance can be sufficiently restored, and a recycled water-absorbent resin having excellent water absorption performance can be efficiently produced.

Solution to Problem

As a result of intensive studies to solve the above problems, the present inventors have discovered that the above problems can be solved by providing, between the acid treatment step and the alkali treatment step in the method described in Patent Document 2, a step of washing with water the water-absorbent resin obtained in the acid treatment step, whereby the present inventors have arrived at an aspect of the present invention.

Accordingly, one aspect of the present invention is a method for producing a recycled water-absorbent resin from a water-absorbent resin contained in a used absorbent article, the water-absorbent resin containing a polymer having partially neutralized carboxyl groups, and the method including a dehydration step (1) of treating the water-absorbent resin with a polyvalent metal salt; an acid treatment step (2) of treating, with an acidic substance, the water-absorbent resin treated with the polyvalent metal salt; a water washing step (3) of washing with water the water-absorbent resin treated with the acidic substance; a neutralization step (4) of neutralizing, with an alkali metal salt, the water-absorbent resin washed with water; and a drying step (5) of drying the water-absorbent resin neutralized with the alkali metal salt and thereby producing a recycled water-absorbent resin.

In addition, the present inventors have discovered that the suitable amount of an additive (such as the above-described acid) used in the recycling treatment can be determined on the basis of the pH of a dispersion in the acid treatment step (2), whereby the present inventors have arrived at another aspect of the present invention.

Accordingly, another aspect of the present invention is a method for determining production conditions in a method for producing a recycled water-absorbent resin from a water-absorbent resin contained in a used absorbent article, the water-absorbent resin containing a polymer having partially neutralized carboxyl groups, the method for producing a recycled water-absorbent resin including a dehydration step (1) of treating the water-absorbent resin with a polyvalent metal salt; an acid treatment step (2) of treating, with an acidic substance, the water-absorbent resin treated with the polyvalent metal salt; a water washing step (3) of washing with water the water-absorbent resin treated with the acidic substance; a neutralization step (4) of neutralizing, with an alkali metal salt, the water-absorbent resin washed with water; and a drying step (5) of drying the water-absorbent resin neutralized with the alkali metal salt and thereby producing a recycled water-absorbent resin, and the method for determining production conditions in the method for producing a recycled water-absorbent resin including determining an end point of the acid treatment step (2) on the basis of the pH of a dispersion of the water-absorbent resin treated with the polyvalent metal salt and containing the acidic substance added during the acid treatment step (2).

Advantageous Effects of Invention

The method for producing a recycled water-absorbent resin according to one aspect of the present invention exhibits an effect that a recycled water-absorbent resin, for which the water absorption performance such as water absorbency is further restored, and which more closely approaches, in terms of the water absorption performance such as water absorbency, a water-absorbent resin contained in an absorbent article prior to use, can be produced from the water-absorbent resin contained in the used absorbent article.

Moreover, the method for producing a recycled water-absorbent resin according to another aspect of the present invention exhibits an effect that even when the content of the water-absorbent resin contained in a used absorbent article is unclear, the amount of an additive (such as the above-mentioned acid) to be used in the recycling process is determined, and as a result, water absorption performance can be sufficiently restored, a recycled water-absorbent resin having excellent water absorption performance can be produced, and an excess increase in the costs required to produce the recycled water-absorbent resin can be prevented.

Brief Description of Drawings

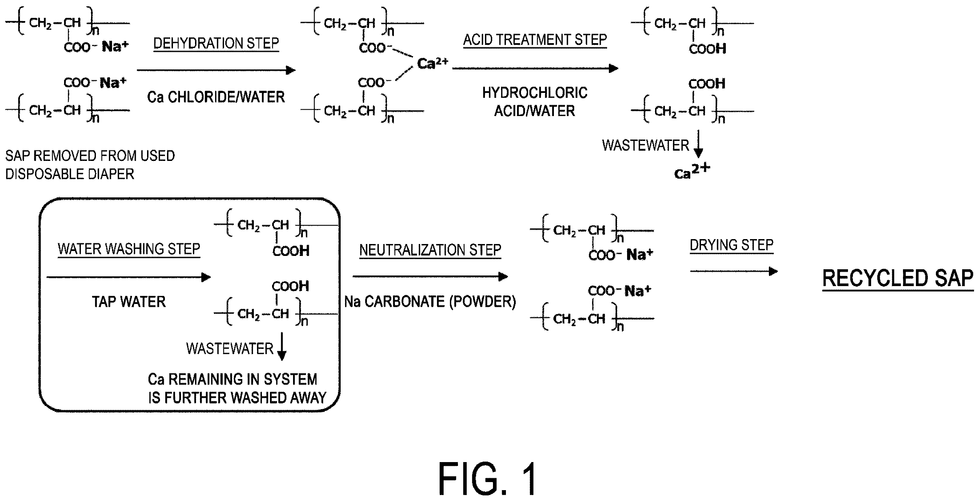

FIG. 1 is a schematic diagram illustrating the mode of each step constituting an example of a method for producing a recycled water-absorbent resin according to one embodiment of the present invention.

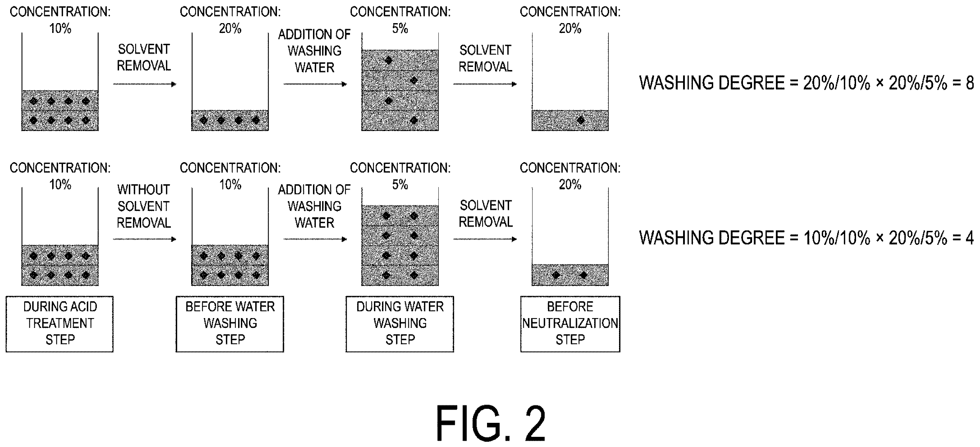

FIG. 2 is a diagram illustrating, for each of two examples of the method for producing a recycled water-absorbent resin according to one embodiment of the present invention, the states of a gel dispersion during an acid treatment step, before a water washing step, during a water washing step, and before a neutralization step, and a method for calculating a washing degree based on the states of the gel dispersion.

Description of Embodiments

An embodiment of the present invention will be described below, but the present invention is not limited thereto. The present invention is not limited to the configurations described below, and various modifications can be made within the scope set forth by the claims. Moreover, embodiments obtained by appropriately combining technical means disclosed in different embodiments are also included in the technical scope of the present invention. In the present specification, a description of "from A to B" indicating a numerical range means "A or more and B or less" unless otherwise specified.

1. Definition of Terms

1-1. Water-Absorbent Resin

As used herein, the term "water-absorbent resin" refers to a polymeric gelling agent having a water swelling capacity (CRC) as defined by NWSP 241.0.R2 (15) of 5 g/g or more and a water-soluble extractive (Ext) as defined by NWSP 270.0.R2 (15) of 70 wt.% or less.

"NWSP" is an abbreviation of "Non-Woven Standard Procedures - Edition 2015". The NWSP was issued jointly by the European Disposables And Nonwovens Association (EDANA) and the Association of the Nonwoven Fabrics Industry (INDA) in the United States and Europe to standardize methods for evaluating nonwoven fabrics and products thereof, and presents standard measuring methods for water-absorbent resins. In the present specification, unless otherwise specified, the physical properties of the water-absorbent resin are measured in accordance with the NWSP.

Moreover, in the present specification, the "water-absorbent resin" is not limited to an aspect in which the entire amount (100 wt.%) is only the water-absorbent resin, and the water-absorbent resin may be a water-absorbent resin composition containing an additive or the like. In addition, in the present specification, the term "water-absorbent resin" may include not only a water-absorbent resin of an aspect included in a used absorbent article, but also a water-absorbent resin subjected to each step constituting the method for producing a recycled water-absorbent resin according to one embodiment of the present invention, that is, the term "water-absorbent resin" may include an intermediate in the method for producing a recycled water-absorbent resin, and may include a recycled water-absorbent resin produced by the production method. Moreover, a water-absorbent resin that is the intermediate can be in a state of a hydrogel in which water is incorporated internally. Therefore, the water-absorbent resin may include a water-absorbent resin in a state of a hydrogel. The water-absorbent resin contains a polymer having partially neutralized carboxyl groups.

1-2. Used Absorbent Article

As used herein, the term "absorbent article" refers to an article that contains a water-absorbent resin as a constituent material and has liquid absorbency. The "absorbent article" generally includes pulp, a nonwoven fabric, a plastic, and the like as constituent materials other than the water-absorbent resin. The absorbent article is not particularly limited, and examples thereof include sanitary materials such as disposable diapers, incontinence pads, and sanitary napkins.

As used herein, the term "used absorbent article" refers to an absorbent article in which a liquid is absorbed. The liquid is not particularly limited, and examples thereof include body fluids such as excreta, blood, and sweat, and physiological saline.

In the present specification, a used absorbent article crushed in a crushing step described below is also included in the term "used absorbent article".

1-3. Others

In the present specification, "from X to Y" indicating a range means "X or more and Y or less".

In the present specification, the term "acid (salt)" means "an acid and/or a salt thereof". "(Meth)acrylic" means "acrylic and/or methacrylic". The term "poly X-based water-absorbent resin" means a water-absorbent resin containing, as a main component and as a repeating unit, a monomer described by "X". Specifically, the term "poly X-based water-absorbent resin" refers to a water-absorbent resin in which the molar ratio of the monomer described by "X" to all the monomers (excluding the crosslinking agent) is preferably from 50 to 100 mol%, more preferably from 70 to 100 mol%, even more preferably from 90 to 100 mol%, and particularly preferably substantially 100 mol%.

In the present specification, the unit of volume of "liter" may be denoted as "l" or "L".

In addition, the reactions in each step may be carried out as a batch reaction, or may be carried out consecutively as long as the time required for the reactions can be secured.

2. Method for Producing Recycled Water-Absorbent Resin

The method for producing a recycled water-absorbent resin according to one embodiment of the present invention is a method for producing a recycled water-absorbent resin from a water-absorbent resin contained in a used absorbent article, wherein the water-absorbent resin contains a polymer having partially neutralized carboxyl groups, and the production method includes a dehydration step (1) of treating the water-absorbent resin with a polyvalent metal salt; an acid treatment step (2) of treating, with an acidic substance, the water-absorbent resin treated with the polyvalent metal salt; a water washing step (3) of washing with water the water-absorbent resin treated with the acidic substance; a neutralization step (4) of neutralizing, with an alkali metal salt, the water-absorbent resin washed with water; and a drying step (5) of drying the water-absorbent resin neutralized with the alkali metal salt and thereby obtaining a recycled water-absorbent resin.

Hereinafter, each step constituting the method for producing the recycled water-absorbent resin will be described in detail. In the following description, FIG. 1, which is a schematic diagram illustrating the mode of each step constituting an example of the method for producing a recycled water-absorbent resin according to one embodiment of the present invention, is referenced, as appropriate.

2-1. Dehydration Step

A dehydration step (1) in one embodiment of the present invention is a step of treating the water-absorbent resin contained in the used absorbent article with a polyvalent metal salt. Here, the expression "treating with a polyvalent metal salt" means that a polyvalent metal salt is added, and thereby at least a portion of the liquid absorbed by the water-absorbent resin contained in the used absorbent article is discharged (dehydrated) by bringing the water-absorbent resin into contact with the polyvalent metal salt.

The water-absorbent resin to be subjected to the dehydration step (1) may be a water-absorbent resin that has been separated in advance from a used absorbent article, or may be a water-absorbent resin contained in a used absorbent article. The matter of subjecting the water-absorbent resin contained in a used absorbent article to the dehydration step (1) means that the used absorbent article or the used absorbent article that has been crushed in a crushing step described below is directly subjected as is to the dehydration step (1). In this case, a water-absorbent resin treated with the polyvalent metal salt can be obtained by separating the water-absorbent resin from the used absorbent article treated with the polyvalent metal salt. The water-absorbent resin separated in advance from a used absorbent article may be, for example, a water-absorbent resin obtained through a crushing step and/or a separation step described below.

The method for separating the water-absorbent resin from the used absorbent article described above is not particularly limited, and a known method can be used. Examples of the known method include a method including a crushing step and/or a separation step described below.

The crushing step is a step of crushing a used absorbent article. The crushing is carried out by a physical force such as stirring, cutting, shredding, crushing, or the like. The above-described crushing may be implemented in a state in which the used absorbent article is immersed in water (in an aqueous solution). In order to facilitate separation of the water-absorbent resin in the separation step described below, the crushing may be carried out by crushing the used absorbent article while stirring the used absorbent article.

The separation step is a step of separating the crushed, used absorbent article into constituent materials containing the water-absorbent resin and recovering at least the water-absorbent resin. In the separation step, constituent materials besides the water-absorbent resin may also be recovered. The water-absorbent resin recovered in the separation step is a water-absorbent resin in the form of a hydrogel.

The method for separating the above-described constituent materials is not particularly limited, and examples thereof include a method in which the constituent materials are separated and recovered using a screen, and a method in which a difference in specific gravity between the constituent materials is used to separate and recover the constituent materials from the crushed absorbent article, which is in a state of being dispersed in water. For example, as the crushing step, the absorbent article can be crushed in water to prepare the crushed absorbent article in a state of being dispersed in water, and the separation step can be simultaneously carried out.

The used absorbent article may be washed and/or sterilized before the dehydration step (1) or before the crushing step when the crushing step is carried out before the dehydration step (1). In the washing and/or sterilization described above, harmful bacteria contained in the used absorbent article may be killed by placing the absorbent article in a high temperature and high pressure environment, or the harmful bacteria may be killed by using a chemical agent. When a chemical agent is used, the chemical agent is not particularly limited as long as the desired cleanliness can be achieved. Examples of the chemical agent include an aqueous solution in which a disinfectant such as sodium hypochlorite and chlorine dioxide is dissolved, and also ozone water, a hydrogen peroxide solution, and electrolyzed water (acidic electrolyzed water). Here, when the washing and/or sterilization is implemented using the chemical agent, a solution (dispersion) containing the water-absorbent resin and the chemical agent can be obtained. In particular, when ozone water and/or aqueous hydrogen peroxide is used to implement the washing and/or sterilization, the washing and/or sterilization is preferably carried out under acidic conditions. Furthermore, preferably, the washing and/or sterilization is carried out in a tank having a stirring blade, and/or the absorbent article and the chemical agent are efficiently mixed through convection of the solution.

After the above-mentioned washing and/or sterilization, the washed and/or sterilized absorbent article is separated from the liquid by a known method such as a filtration operation. The separated absorbent article can be subjected to the dehydration step (1) or to the crushing step when the crushing step is carried out before the dehydration step (1).

The water-absorbent resin contains a polymer having partially neutralized carboxyl groups. The polymer is not particularly limited, and examples thereof include a crosslinked poly(meth)acrylic acid salt-based polymer, an isobutylene/maleic acid salt-based copolymer, a starch/polyacrylic acid salt-based copolymer, a polyvinyl alcohol (PVA)/polyacrylic acid salt-based copolymer, a starch/polyacrylonitrile copolymer (in which a nitrile group is converted to a carboxylic acid salt by hydrolysis), and a crosslinked carboxymethylcellulose (in which a carboxymethyl group is bonded to cellulose). The water-absorbent resin may be a three-dimensional crosslinked body having a crosslinked structure. The water-absorbent resin is preferably a three-dimensional crosslinked body of a poly(meth)acrylic acid-based polymer.

The water-absorbent resin contains a carboxyl group (-C(=O)OH) and a neutralized carboxyl group (a group formed of $-C(=O)O^-$ and $A^+$, wherein $A^+$ is a cation). Here, the $A^+$ cation is a monovalent cation, and is, for example, an alkali metal ion such as a sodium ion ($Na^+$). Thus, the water-absorbent resin may be, for example, a polymer having carboxyl groups partially neutralized with an alkali metal salt such as sodium hydroxide.

A water-absorbent resin contained in a used absorbent article has absorbed a liquid (excreta or the like) and is in a swollen state (hereinafter, the water-absorbent resin is referred to as a "used water-absorbent resin"). Here, the "used water-absorbent resin" is a water-absorbent resin to be subjected to the dehydration step (1). The water-absorbent resin in a swollen state has absorbed and retains a liquid (excreta or the like) through osmotic pressure generated by the dissociated $A^+$ and through electrostatic repulsion of the dissociated carboxyl group ($C(=O)O^-$). Since the ion concentration [$A^+$, $C(=O)O^-$] inside the water-absorbent resin is higher than the ion concentration of the liquid present outside the water-absorbent resin, the osmotic pressure acts in a direction of eliminating the concentration difference between the inside and the outside of the water-absorbent resin. In other words, the osmotic pressure acts such that the external liquid enters the inside of the water-absorbent resin, that is, such that the water-absorbent resin absorbs and retains the external liquid. Meanwhile, the electrostatic repulsion acts in such a direction that dissociated carboxyl groups repel each other and the distance between the dissociated carboxyl groups is increased inside the water-absorbent resin that has absorbed water and is in a swollen state. Therefore, a gap is generated between the dissociated carboxyl groups, and the external liquid enters the gap. At the same time, an electrostatic attractive force is generated between the dissociated carboxyl group and a molecule (e.g., a water molecule) constituting the external liquid, and the molecule constituting the external liquid is trapped in the gap. Therefore, the action of electrostatic repulsion causes the water-absorbent resin to absorb and retain the external liquid. As a result, the liquid is absorbed and retained by the "used water-absorbent resin". Here, when the water-absorbent resin in a swollen state comes into contact with the polyvalent metal ions, as illustrated in the structural formulae before and after the "dehydration step" in FIG. 1, a plurality of dissociated carboxyl groups are ionically crosslinked via the polyvalent metal ion (e.g., $Ca^{2+}$). Through the above-described ionic crosslinking, the water-absorbent resin in a swollen state shrinks, and as a result, the liquid absorbed by the water-absorbent resin in a swollen state is released. Therefore, when the "used water-absorbent resin" is treated with the polyvalent metal salt, the used water-absorbent resin comes into contact with the polyvalent metal ions, and as a result, the used water-absorbent resin releases the absorbed liquid and is dehydrated. Hereinafter, the above-described operation of releasing the liquid absorbed by the water-absorbent resin in a swollen state is referred to as a "dehydration operation".

In the dehydration operation, an example of the treatment with the polyvalent metal salt, that is, the method for adding the polyvalent metal salt and bringing the used water-absorbent resin into contact with the polyvalent metal ions includes a method of bringing the used absorbent article or the used water-absorbent resin into contact with an aqueous solution containing the polyvalent metal salt. A specific example is a method in which a used absorbent article or a used water-absorbent resin is immersed in an aqueous solution containing a polyvalent metal salt. The used absorbent article or the used water-absorbent resin is preferably brought into contact with the aqueous solution containing the polyvalent metal compound under stirring.

An alkaline earth metal salt, a transition metal salt, or the like can be used as the polyvalent metal salt.

The alkaline earth metal salt to be used may be a water-soluble salt of beryllium, magnesium, calcium, strontium, barium, or the like. One type of these may be selected and used, or two or more types thereof may be used in combination. Examples of preferred alkaline earth metal salts include calcium chloride, calcium nitrate, magnesium chloride, and magnesium nitrate. Among these, calcium chloride is more preferred.

Examples of the transition metal salt include water-soluble salts of iron, cobalt, nickel, and copper. The transition metal salt may be any inorganic acid salt, organic acid salt, complex, or the like, as long as the transition metal salt can be incorporated into a water-absorbent polymer. Among these, the transition metal salt is preferably an inorganic acid salt or an organic acid salt from the viewpoints of cost, easy availability, and the like. Examples of the inorganic acid salt include iron salts such as iron chloride, iron sulfate, iron phosphate, and iron nitrate; cobalt salts such as cobalt chloride, cobalt sulfate, cobalt phosphate, and cobalt nitrate; nickel salts such as nickel chloride and nickel sulfate; and copper salts such as copper chloride and copper sulfate. Examples of the organic acid salt include iron lactate, cobalt acetate, cobalt stearate, nickel acetate, and copper acetate.

The amount of the polyvalent metal salt used may be appropriately determined from the shrinkage state of the water-absorbent resin after the dehydration operation, that is, after treatment with the polyvalent metal salt, and for example, the amount of the polyvalent metal salt used per 1 g (solid content) of the used water-absorbent resin is preferably from 4.5 to 17 mmol, more preferably from 5.0 to 14 mmol, and even more preferably from 5.5 to 12 mmol. When the amount of the polyvalent metal salt used is too small, the used water-absorbent resin may be insufficiently dehydrated. When the amount of the polyvalent metal salt used is too large, the polyvalent metal ions remain in the treatment liquid without being incorporated into the used water-absorbent resin, which leads to waste of the polyvalent metal salt and an increase in treatment cost. When the amount of the polyvalent metal salt used is within the above-described preferable range, the used water-absorbent resin can be sufficiently dehydrated, and an excessive increase in treatment cost can be suitably prevented.

When the polyvalent metal salt is added to a used absorbent article, the water-absorbent resin treated with the polyvalent metal salt is the water-absorbent resin contained in the used absorbent article after addition of the polyvalent metal salt. Meanwhile, when the polyvalent metal salt is added to the used water-absorbent resin, the water-absorbent resin after treatment with the polyvalent metal salt is the water-absorbent resin after addition of the polyvalent metal salt. The amount of the polyvalent metal salt used may be determined by, for example, subjecting a used absorbent article or a used water-absorbent resin to the dehydration operation using a certain amount of a polyvalent metal salt, then extracting a portion of the water-absorbent resin treated with the polyvalent metal salt, and visually confirming and determining the shrinkage state of the water-absorbent resin. When the shrinkage of the water-absorbent resin after treatment with the polyvalent metal salt is insufficient, the polyvalent metal salt is additionally added to the water-absorbent resin treated with the polyvalent metal salt, and the dehydration operation is carried out again to sufficiently dehydrate the water-absorbent resin. However, when the amount of the polyvalent metal salt is excessive as described above, the polyvalent metal salt is wasted and the treatment cost is increased.

The treatment time for the treatment with the polyvalent metal salt is not particularly limited as long as the treatment time is sufficient for the polyvalent metal ions to be incorporated into the used water-absorbent resin. The lower limit value of the treatment time of the treatment with the polyvalent metal salt is preferably 5 minutes or more, more preferably 10 minutes or more, and still more preferably 15 minutes or more. The upper limit value of the treatment time of the treatment with the polyvalent metal salt is preferably 3 hours or less, more preferably 2 hours or less, and even more preferably 1 hour or less. When the treatment time of the treatment with the polyvalent metal salt is too short, the dehydration property of the used water-absorbent resin becomes insufficient, and a large amount of the liquid component remains inside the used water-absorbent resin. When the treatment time of the treatment with the polyvalent metal salt is too long, the amount of polyvalent metal ions incorporated into the used water-absorbent resin becomes saturated, and therefore a treatment time exceeding the upper limit value is economically undesirable. In a case in which the water-absorbent resin treated with the polyvalent metal salt is in a state of being extracted from the dispersion in the below-described dehydration step (1), the treatment time of the treatment with the polyvalent metal salt means the time from the startup of addition of the polyvalent metal salt to the used absorbent article or the used water-absorbent resin to the time at which the below-described operation of extracting the water-absorbent resin treated with the polyvalent metal salt is implemented. In a case in which the water-absorbent resin treated with the polyvalent metal salt is in a state of being present in the dispersion in the below-described dehydration step (1), the treatment time of the treatment with the polyvalent metal salt means a time until the dispersion in the dehydration step (1) is subjected to the acid treatment step (2).

The reaction temperature of the treatment with the polyvalent metal salt is not particularly limited as long as the reaction temperature is a temperature at which the polyvalent metal ions are incorporated into the used water-absorbent resin. The lower limit value of the reaction temperature of the treatment with the polyvalent metal salt is preferably 5°C or higher, more preferably 10°C or higher, and still more preferably 15°C or higher. The upper limit value of the reaction temperature of the treatment with the polyvalent metal salt is preferably 80°C or lower, more preferably 70°C or lower, still more preferably 60°C or lower, and particularly preferably 40°C or lower. The reaction temperature means the temperature of a mixture, for example, an aqueous solution, containing the polyvalent metal salt and the used absorbent article or the used water-absorbent resin.

The water-absorbent resin treated with the polyvalent metal salt is in a state of being present in a dispersion (hereinafter, referred to as a "dispersion in the dehydration step (1)") containing a liquid such as water. The water-absorbent resin after treatment with the polyvalent metal salt and obtained in the dehydration step (1) may be in a state of remaining in the dispersion in the dehydration step (1). The water-absorbent resin after treatment with the polyvalent metal salt and obtained in the dehydration step (1) may be in a state of being extracted from the dispersion in the dehydration step (1). Here, when the dehydration operation is carried out on the used absorbent article, for example, the above-described separation operation, or the crushing operation and the separation operation can be used as the operation of extracting the water-absorbent resin after the treatment with the polyvalent metal salt. When the used water-absorbent resin is subjected to the dehydration operation, the water-absorbent resin treated with the polyvalent metal salt may be extracted using a known method such as filtration.

2-2. Acid Treatment Step

The acid treatment step (2) in one embodiment of the present invention is a step of treating, with an acidic substance, the water-absorbent resin treated with the polyvalent metal salt. Here, "treating with an acidic substance" generally means that the acidic substance is added to a dispersion (including a dispersion solvent such as water) of the water-absorbent resin treated with the polyvalent metal salt, and the acidic substance is brought into contact with the water-absorbent resin for treatment.

In the acid treatment step (2), a dispersion of the water-absorbent resin treated with the polyvalent metal salt (hereinafter, the dispersion may also be referred to as the "dispersion in the acid treatment step (2)") may be prepared, after which an acidic substance may be added to the dispersion in the acid treatment step (2) to thereby bring the water-absorbent resin in the dispersion in the acid treatment step (2) into contact with the acidic substance and treat the water-absorbent resin with the acidic substance. The dispersion in the acid treatment step (2) can be prepared by adding the water-absorbent resin treated with the polyvalent metal salt to a dispersion solvent. Alternatively, preparation of the dispersion in the acid treatment step (2) and addition of the acidic substance may be implemented simultaneously to thereby bring the water-absorbent resin in the dispersion in the acid treatment step (2) into contact with the acidic substance and treat the water-absorbent resin with the acidic substance. Simultaneously implementing the preparation of the dispersion in the acid treatment step (2) and the addition of the acidic substance means that the water-absorbent resin treated with the polyvalent metal salt is added to a solution containing the acidic substance to prepare the dispersion in the acid treatment step (2), and the water-absorbent resin in the dispersion in the acid treatment step (2) is brought into contact with the acidic substance. The dispersion solvent and/or the solvent in the solution containing the acidic substance is not particularly limited as long as the solvent is one that can be used to prepare the dispersion in the acid treatment step (2), and for example, water can be used.

When the water-absorbent resin treated with the polyvalent metal salt is in a state of remaining in the dispersion in the dehydration step (1), the acidic substance may be added to the dispersion in the dehydration step (1) to thereby bring the water-absorbent resin in the dispersion in the dehydration step (1) into contact with the acidic substance and treat the water-absorbent resin with the acidic substance.

In the acid treatment step (2), it is more preferable to bring the acidic substance into contact with the water-absorbent resin treated with the polyvalent metal salt by adding the water-absorbent resin treated with the polyvalent metal salt while stirring the solution containing the acidic substance.

In the acid treatment step (2), as illustrated in the structural formulae before and after the "acid treatment step" in FIG. 1, the water-absorbent resin treated with the polyvalent metal salt is treated with an acidic substance to thereby dissociate the bonds between the polyvalent metal ions (e.g., $Ca^{2+}$) and the dissociated carboxyl groups ($C(=O)O^-$) in the water-absorbent resin treated with the polyvalent metal salt. As a result, the polyvalent metal ions are released from the water-absorbent resin treated with the polyvalent metal salt, and a water-absorbent resin having a carboxyl group ($C(=O)OH$) in a free acid state is produced.

The acidic substance is not particularly limited, and for example, an inorganic acid and/or an organic acid can be used.

Examples of the inorganic acid include sulfuric acid, hydrochloric acid, and nitric acid. The inorganic acid may be used in combination with an organic acid described below. Examples of the organic acid include organic substances having an acid group such as a carboxyl group or a sulfo group. As the acidic substance, one type of acidic substance selected from the above-mentioned inorganic acids and organic acids may be used, or a mixture of two or more types of acidic substances selected from the above-mentioned inorganic acids and organic acids may be used. As the acidic substance, an inorganic acid and an organic acid may be used in combination. Specific examples of the organic acid include citric acid, tartaric acid, malic acid, succinic acid, oxalic acid, gluconic acid, pentanoic acid, butanoic acid, propionic acid, glycolic acid, acetic acid, formic acid, and sulfonic acid. Examples of the sulfonic acid include methanesulfonic acid, trifluoromethanesulfonic acid, benzenesulfonic acid, and p-toluenesulfonic acid.

The acidic substance is added to the water-absorbent resin treated with the polyvalent metal salt so that the pH of the dispersion (hereinafter, also referred to as the "reaction liquid") after the addition of the acidic substance is preferably from -1.0 to 3.0, more preferably from 0 to 2.8, and even more preferably from 0.5 to 2.5. Here, the pH of the reaction liquid can be controlled by adjusting the addition amount of the acidic substance. Therefore, in the acid treatment step (2), the acidic substance is preferably added to the dispersion in the acid treatment step (2) in such an amount that the pH of the reaction liquid is within the preferable range described above.

A low pH of the reaction liquid means a high concentration of protons ($H^+$) present in the reaction liquid. Here, the above-described dissociation reaction is a reversible reaction represented by a reaction formula of $(COO)_nX + nH^+ \rightleftarrows nCOOH + X^{n+}$ (in the formula, X represents a polyvalent metal, and n represents the valence of the polyvalent metal). When the pH of the reaction liquid is low, the equilibrium in the reaction formula is biased to the right side of the formula, i.e., the dissociation side, and the amount of carboxyl groups (-COOH) in a free acid state and present in the reaction liquid increases. In other words, the equilibrium in the dissociation reaction formula is the equilibrium of the bond between the carboxyl group and the polyvalent metal ion.

The carboxyl group in the free acid state is neutralized at a specific neutralization ratio in the neutralization step described below. The neutralized carboxyl group has a function of absorbing liquid such as excreta. Meanwhile, carboxyl groups in a state of being bonded to polyvalent metal ions and ionically crosslinked either do not have the function of absorbing the liquid, or undergo a decrease, even after the neutralization step. Therefore, when the above-described dissociation of the bond is insufficient, restoration of the water absorption performance of the recycled water-absorbent resin obtained in the below-described drying step becomes insufficient, and the water absorption performance of the recycled water-absorbent resin may be reduced.

When the pH of the reaction liquid is equal to or lower than the upper limit value of the above-described range, the equilibrium of the bond between the carboxyl group and the polyvalent metal ion is largely biased to the dissociation side, which means that above-described dissociation of the bond sufficiently proceeds. Therefore, when the pH of the reaction liquid is set to be equal to or lower than the upper limit value of the above-mentioned range, the water absorption performance (e.g., the CRC) of the recycled water-absorbent resin is sufficiently restored, and the water absorption performance of the recycled water-absorbent resin can be suitably improved. It is economically preferable that the pH of the reaction liquid be equal to or higher than the lower limit value of the above-described range because an excessive increase in cost due to the use of a more than necessary amount of an acidic substance can thereby be prevented.

The method for measuring the pH of the reaction liquid is not particularly limited, and for example, the pH can be measured using a commercially available pH test paper and/or a commercially available pH meter. For example, through a method described below in "3. Method for Determining Production Conditions in Method for Producing Recycled Water-Absorbent Resin", the acidic substance is added to the water-absorbent resin treated with the polyvalent metal salt so that the pH of the reaction liquid is adjusted to within the prescribed range.

The reaction temperature in the treatment with the acidic substance is not particularly limited as long as the reaction temperature is a temperature at which the bond between the polyvalent metal ion and the carboxyl group of the water-absorbent resin treated with the polyvalent metal salt can be dissociated. The reaction temperature in the treatment with the acidic substance is preferably from 5 to 80°C, more preferably from 10 to 70°C, and still more preferably from 15 to 60°C. The reaction temperature in the treatment with the acidic substance means the temperature of the dispersion in the acid treatment step (2) immediately before and after the addition of the acidic substance (or the temperature from immediately before the addition of the acidic substance to the end of the acid treatment step).

The water-absorbent resin treated with the acidic substance and obtained in the acid treatment step (2) may be in a state of being present in the dispersion in the acid treatment step (2) after completion of the treatment with the acidic substance. Alternatively, the water-absorbent resin treated with the acidic substance and obtained in the acid treatment step (2) may be in a state of being extracted from the dispersion in the acid treatment step (2) after completion of the treatment with the acidic substance. The state of being extracted can be said to be a state after implementation of an operation of removing most of the dispersion solvent with respect to the dispersion in the acid treatment step (2) after completion of the below-described treatment with the acidic substance. Here, the operation of extracting the water-absorbent resin treated with the acidic substance is not particularly limited, and for example, a known method such as a filtration operation can be used. Specific examples of the filtration operation include an operation in which, after completion of the treatment with the acidic substance, the dispersion in the acid treatment step (2) is filtered using a 100-mesh wire net and allowed to stand for 1 minute.

The concentration of the insoluble component (gel) contained in the dispersion in the acid treatment step (2) immediately after completion of the treatment with the acidic substance is used as the "gel concentration of the dispersion during the acid treatment step" in the calculation of the below-described washing degree. From the viewpoint of increasing the washing degree described below, an operation is preferably carried out in which at least a portion of the dispersion solvent is removed from the dispersion in the acid treatment step (2) after completion of the treatment with the acidic substance. As illustrated in the acid treatment step of FIG. 1, the polyvalent metal ions (e.g., $Ca^{2+}$) dissociated by the treatment with the acidic substance are removed together with the removed dispersion solvent, i.e., the wastewater by carrying out the operation of removing at least a portion of the dispersion solvent. Furthermore, from the same viewpoint, it is particularly preferable to carry out an operation of removing most of the dispersion solvent from the dispersion in the acid treatment step (2) after completion of the treatment with the acidic substance, i.e., an operation of extracting the water-absorbent resin treated with the acidic substance by implementing a filtration operation, centrifugation, or the like. The method for removing at least a portion or most of the dispersion solvent is not particularly limited, and for example, a commonly used solid-liquid separation means such as decantation, a filtration operation, or centrifugation can be used. The phrase "immediately after completion of the treatment with the acidic substance" refers to a timing at a stage before the operation of removing these dispersion solvents is carried out and after the end of the treatment. In the present specification, "removing most of the dispersion solvent" usually means removing of the dispersion solvent to such an extent that the dispersion solvent cannot be visually confirmed on the surface of the water-absorbent resin obtained by removing the dispersion solvent. In the present invention, the operation of removing at least a portion of the dispersion solvent and the operation of removing most of the dispersion solvent are operations of removing, together with the dispersion solvent, the polyvalent metal ions contained in the dispersion solvent. In general, as one method for removing at least a portion or most of the dispersion solvent, a method is considered in which the dispersion solvent is evaporated, and the dispersion in the acid treatment step (2) after completion of the treatment with the acidic substance is evaporated to dryness. However, when the above-described operation of evaporating the dispersion solvent is carried out, the polyvalent metal ions are concentrated in the dispersion in the acid treatment step (2) after completion of the treatment with the acidic substance, and the washing degree described below is instead reduced. Therefore, as the operation of removing at least a portion of the dispersion solvent and the operation of removing most of the dispersion solvent, from the viewpoint of removing the polyvalent metal ions, an operation is preferably adopted in which the dispersion solvent is removed in a liquid state. Examples of such operations include liquid-liquid separation operations such as the decantation described above and solid-liquid separation operations such as the filtration operation described above.

In the method for producing the recycled water-absorbent resin, as described above, an operation of removing the soluble components in the water-absorbent resin treated with the acidic substance may be carried out after completion of the treatment with the acidic substance and until just before the below-described water washing step (3). Examples of the soluble components include substances (ions) that are dissolved in the dispersion solvent and incorporated into (or associated with) the water-absorbent resin treated with the acidic substance. The substances (ions) dissolved in the dispersion solvent are, for example, the polyvalent metal ions. The substances (ions) and the like dissolved in the dispersion solvent can be removed in a state of a solution in which the substances are dissolved in the dispersion solvent. A known method can be used as the operation for removing the soluble components, and for example, a method such as decantation and/or filtration, centrifugation, or belt concentration can be adopted. The below-described washing degree can be further increased by implementing the operation of removing the soluble components. Since the soluble components contain the polyvalent metal ions, a recycled water-absorbent resin in which the amount of the remaining polyvalent metal ions is further reduced can be produced by carrying out the operation of removing the soluble components. The operation of removing the soluble components, the operation of removing at least a portion of the dispersion solvent, and the operation of removing most of the dispersion solvent can be carried out by a common method such as decantation, filtration, or centrifugation. When the operation of removing the soluble components is carried out by a common method described above, the soluble components are removed along with the removal of at least a portion or most of the dispersion solvent. Therefore, when the operation of removing the soluble components is carried out by the common method, it is deemed that both the operation of removing at least a portion of the dispersion solvent or the operation of removing most of the dispersion solvent. and the operation of removing the soluble components are carried out in the method for producing a recycled water-absorbent resin.

When the operation of removing a portion of the dispersion solvent is not implemented, and the operation of removing the soluble components is not carried out, after completion of the treatment with the acidic substance, the dispersion in the acid treatment step (2) is directly subjected as is to the below-described water washing step (3). When the operation of removing at least a portion of the dispersion solvent is carried out, the dispersion after implementation of the operation of removing a portion of the dispersion solvent and the operation of removing the soluble components, or the acidic substance-treated water-absorbent resin (the resin containing the dispersion solvent because the dispersion solvent is removed but not dried; gel-like resin) obtained by implementing the operation of removing most of the dispersion solvent and the operation of removing the soluble components is subjected to the below-described water washing step (3). Here, the dispersion or the acidic substance-treated water-absorbent resin to be subjected to the water washing step (3) corresponds to the gel dispersion immediately before coming into contact with water in the water washing step (3). Therefore, the concentration of the insoluble component in the dispersion or the acidic substance-treated water-absorbent resin to be subjected to the water washing step (3) is used as the "gel concentration of the dispersion before the water washing step" in the calculation of the below-described washing degree.

2-3. Water Washing Step

A water washing step (3) in one embodiment of the present invention is a step of washing with water the water-absorbent resin treated with the acidic substance and thereby producing a water-absorbent resin washed with water.

In the water washing step (3), the water-absorbent resin treated with the acidic substance is preferably washed with water so that a ratio (E1/EO) of an extraction liquid electrical conductivity E1 of the water-absorbent resin washed with water and obtained in the water washing step (3) to an extraction liquid electrical conductivity EO of the water-absorbent resin treated with the acidic substance and obtained in the acid treatment step (2) is less than 0.40. In this case, before the water washing step (3) is carried out, the extraction liquid electrical conductivity EO of the water-absorbent resin treated with the acidic substance must be measured in advance by a method described below. The extraction liquid electrical conductivity E0 is a parameter indicating the amount of the polyvalent metal ions remaining in the water-absorbent resin treated with the acidic substance.

The water washing step (3) is a step of washing with water the acidic substance-treated water-absorbent resin to thereby wash away polyvalent metal ions present on the surface of the acidic substance-treated water-absorbent resin, inside the water-absorbent resin, and/or in gaps between particles of the water-absorbent resin.

When the polyvalent metal ions remain in the recycled water-absorbent resin, there is a possibility that the water absorption performance such as the water absorbency (e.g., the water absorbency without pressurization (CRC)) of the recycled water-absorbent resin may be reduced. Therefore, the water washing step (3) is carried out, whereby the polyvalent metal ions remaining in the recycled water-absorbent resin can be removed, or the content thereof can be reduced. As a result, the water absorption performance such as the water absorbency of the recycled water-absorbent resin can be improved. Accordingly, the method for producing a recycled water-absorbent resin according to one embodiment of the present invention includes the water washing step (3), and thereby exhibits an effect of being able to produce, from the used water-absorbent resin, a recycled water-absorbent resin in which the water absorption performance such as water absorbency is further restored and which is provided with water absorption performance that more closely approaches that of the water-absorbent resin before use.

When the polyvalent metal ions remain in the recycled water-absorbent resin, the water absorption rate of the recycled water-absorbent resin may decrease. Therefore, the water washing step (3) is carried out, whereby the water absorption rate of the recycled water-absorbent resin can be further improved in some cases. Accordingly, the method for producing a recycled water-absorbent resin according to one embodiment of the present invention includes the water washing step (3), and thereby may also exhibit an effect of being able to produce, from the used water-absorbent resin, a recycled water-absorbent resin in which the water absorption rate is further restored and which is provided with a water absorption rate that more closely approaches that of the water-absorbent resin before use. The water absorption rate is expressed using, for example, a "vortex value" measured in the Examples of the present application.

That is, when a large amount of the polyvalent metal ion remains in the recycled water-absorbent resin, there is a possibility that the water absorption performance (e.g., the water absorbency without pressurization (CRC) and/or the water absorption rate) of the recycled water-absorbent resin may be reduced. Therefore, the water washing step is carried out, whereby the polyvalent metal ions remaining in the recycled water-absorbent resin can be removed, or the content thereof can be reduced. As a result, the water absorption performance (e.g., the water absorbency without pressurization (CRC) and/or the water absorption rate) of the recycled water-absorbent resin can be improved.

The amount of the polyvalent metal ions remaining in the recycled water-absorbent resin is determined by the amount of the polyvalent metal ions remaining in the water-absorbent resin washed with water. The amount of the polyvalent metal ions remaining in the water-absorbent resin correlates with the extraction liquid electrical conductivity E1 of the water-absorbent resin washed with water, the extraction liquid electrical conductivity E1 being measured by a method described below.

When the water-absorbent resin is obtained in a state of being present in a dispersion in the acid treatment step (2) or the water washing step (3), the extraction liquid electrical conductivity E0 of the water-absorbent resin treated with the acidic substance or the extraction liquid electrical conductivity E1 of the water-absorbent resin washed with water is measured by a method including steps (i) to (iii) described below:

(i) a step of obtaining a filtered water-absorbent resin by implementing an operation of using a 100-mesh wire net to filter the dispersion of the water-absorbent resin obtained in the acid treatment step (2) or the water washing step (3) and leaving the filtered product for 1 minute;
(ii) a step of obtaining an extraction liquid by adding the filtered water-absorbent resin obtained in step (i) and deionized water having a weight four times the weight of the filtered water-absorbent resin to a beaker, and stirring the mixture with a stirrer at a temperature of 25°C for 20 minutes; and
(iii) a step of measuring, with an electrical conductivity meter, the electrical conductivity of the extraction liquid obtained in step (ii).

In the acid treatment step (2) or the water washing step (3), when the water-absorbent resin is obtained in a state of being removed from the dispersion, the extraction liquid electrical conductivity E0 of the water-absorbent resin treated with the acidic substance or the extraction liquid electrical conductivity E1 of the water-absorbent resin washed with water is measured by a method including steps (iv) and (v) described below:

(iv) a step of obtaining an extraction liquid by adding the water-absorbent resin obtained in the acid treatment step (2) or the water washing step (3) and deionized water having a weight four times the weight of the water-absorbent resin to a beaker, and stirring the mixture with a stirrer at a temperature of 25°C for 20 minutes; and
(v) a step of measuring, with an electrical conductivity meter, the electrical conductivity of the extraction liquid obtained in step (iv).

When the extraction liquid electrical conductivity EO of the water-absorbent resin treated with the acidic substance is to be measured, the operations of obtaining the extraction liquid in the step (ii) and the step (iv) also correspond to the below-described washing operation. Therefore, a water-absorbent resin obtained by implementing a below-described operation of extracting the water-absorbent resin washed with water from the extraction liquid after measuring the extraction liquid electrical conductivity EO of the water-absorbent resin treated with the acidic substance can also be used as the water-absorbent resin washed with water.
In the water washing step (3), the water-absorbent resin treated with the acidic substance is washed with water so that the ratio (E1/EO) of the extraction liquid electrical conductivity E1 to the extraction liquid electrical conductivity E0 is preferably less than 0.40, more preferably 0.35 or less, and even more preferably 0.30 or less.
The fact that the ratio (E1/E0) is within the above range means that a large amount of the polyvalent metal ions has been removed in the water washing step (3). Therefore, the amount of the polyvalent metal ions remaining in the water-absorbent resin washed with water is suitably reduced, and as a result, the water absorption performance (e.g., the water absorbency without pressurization (CRC) and/or the water absorption rate) of the recycled water-absorbent resin can be more suitably improved.
The upper limit value of the extraction liquid electrical conductivity EO is preferably 50 mS/cm or less, more preferably 40 mS/cm or less, and still more preferably 30 mS/cm or less. The lower limit value of the extraction liquid electrical conductivity E0 is usually 10 mS/cm or more.
A case in which the ratio (E1/E0) is within the above-described range and the extraction liquid electrical conductivity E0 is within the above-described range means that the extraction liquid electrical conductivity E1 has a smaller value. Therefore, in this case, the amount of the polyvalent metal ions remaining in the water-absorbent resin washed with water is more suitably reduced. As a result, the water absorption performance (e.g., the water absorbency without pressurization (CRC) and/or the water absorption rate) of the recycled water-absorbent resin is more suitably improved.
In the water washing step (3), an operation of washing with water the water-absorbent resin treated with the acidic substance (hereinafter, the operation is referred to as the "washing operation") is not particularly limited, and a known method can be used. The washing operation can be various modes of washing operations such as batch stirring and/or continuous spray washing. Specifically, examples of the washing operation include an operation in which the water-absorbent resin treated with the acidic substance is immersed in water and stirred, and an operation in which the water-absorbent resin treated with the acidic substance is spray-washed by spraying water or using a shower. The washing operation may be repeatedly performed. When the washing operation is repeatedly performed, the washing effect is enhanced, and a larger amount of the polyvalent metal ions can be removed from the water-absorbent resin treated with the acidic substance.

The type of water (washing water) used in the washing operation is not particularly limited, and for example, deionized water, tap water, or distilled water can be used. The washing water is preferably water having low electrical conductivity. The electrical conductivity of the washing water depends on the concentration of ions contained in the washing water. Specifically, as the ion concentration in the washing water becomes lower, the electrical conductivity of the washing water decreases. Water having a low electrical conductivity, i.e., a low ion concentration, can capture more ions such as the polyvalent metal ions. Therefore, the polyvalent metal ions released in the acid treatment step (1) can be more efficiently removed from the water-absorbent resin treated with the acidic substance by using water having low electrical conductivity as the washing water. From the above-described viewpoint, the electrical conductivity of the washing water is preferably as low as possible, and specifically, the electrical conductivity of the washing water is preferably 50 mS/cm or less, more preferably 25 mS/cm or less, and even more preferably 20 mS/cm or less.

When the extraction liquid electrical conductivity E1 is to be subsequently measured, the amount of remaining polyvalent metal ions is determined by measuring the electrical conductivity, and therefore ion-free water is more preferably used as the washing water. As used herein, the term ion-free water means water in which the ion content is so low that the ratio ($E1/E0$) is hardly affected. Here, the content of ions in water and the electrical conductivity of the water are correlated. Therefore, an electrical conductivity of water that is a small value equal to or less than a specific value means that the water has such a low ion content that the ratio ($E1/EO$) is hardly affected. Specifically, when the extraction liquid electrical conductivity E1 is to be measured, the electrical conductivity of the washing water is preferably 5 mS/cm or less, and more preferably 3 mS/cm or less.

Water existing in nature usually has a predetermined amount of ions dissolved therein and has an electrical conductivity higher than the above-mentioned preferable upper limit value. The washing water having an electrical conductivity equal to or lower than the above-described preferable upper limit value can be prepared by reducing the ion concentration of water existing in nature using a known purification method. In order to prepare a washing water having a lower electrical conductivity, an operation such as repeatedly implementing purification in the purification method must be carried out, and therefore the cost for the purification method increases, and as a result, the cost of the entire method for producing the recycled water-absorbent resin increases. Thus, from the viewpoint of preventing the cost from increasing excessively, the electrical conductivity of the washing water is preferably 0.01 mS/cm or more, more preferably 0.05 mS/cm or more, and still more preferably 0.1 mS/cm or more.

As the temperature during the washing operation, a high temperature ranging from room temperature to 100°C can be applied. The temperature during the washing operation means the temperature of the washing water. In the washing operation, high-temperature steam can also be used as the washing water. The temperature during the washing operation is preferably from 5 to 80°C, more preferably from 10 to 60°C, and even more preferably from 15 to 40°C. When high-temperature washing water or high-temperature steam is used in the washing operation, not only a washing effect but also a sterilizing effect can be expected.

The treatment time in the washing operation is preferably from 10 seconds to 30 minutes, more preferably from 30 seconds to 25 minutes, and even more preferably from 60 seconds to 20 minutes. When the treatment time in the washing operation is too short, removal of the polyvalent metal ions from the water-absorbent resin treated with the acidic substance may be insufficient. When the treatment time in the washing operation is too long, the amount of the polyvalent metal ions incorporated into the washing water becomes saturated, which is economically undesirable. Therefore, when the treatment time in the washing operation is set to be within the preferable range described above, a sufficient amount of the polyvalent metal ions can be efficiently removed in the water washing step (3) from the water-absorbent resin treated with the acidic substance.

The water-absorbent resin after the washing operation is in a state of being present in the dispersion containing the washing water (hereinafter, the dispersion is referred to as "the dispersion in the water washing step (3)"). In the water washing step (3), the water-absorbent resin washed with water can be removed by implementing an operation of removing water (the washing water) from the dispersion in the water washing step (3). In this case, as illustrated in the water washing step of FIG. 1, the polyvalent metal salt remaining in the system is removed together with the water that is removed. The operation of removing the water (washing water) from the dispersion in the water washing step (3) is not particularly limited. From the viewpoint of reducing the amount of the polyvalent metal ions remaining in the water-absorbent resin washed with water, as much water as possible is preferably removed from the dispersion in the water washing step (3). In other words, the water content in the water-absorbent resin washed with water is preferably reduced as much as possible. The operation of removing the water is not particularly limited, and a commonly used solid-liquid separation means such as filtration or centrifugation can be applied. A specific example of the operation of removing the water is an operation in which the dispersion in the water washing step (3) is filtered using a 100-mesh wire net and then allowed to stand for 1 minute.

The concentration of the insoluble component (gel) contained in the dispersion after the washing operation in the water washing step (3) is used as the "gel concentration of the dispersion during the water washing step" in the calculation of the washing degree described below. In the method for producing a recycled water-absorbent resin, the operation of removing soluble components and the operation of removing most of the dispersion solvent (water, washing water) or the dispersion after implementation of the operation of removing a portion of the dispersion solvent and the operation of removing the soluble components can be carried out after completion of the treatment with water and until immediately before the below-described neutralization step (4). The phrase "after the washing operation" refers to a timing at a stage before the operation of removing these dispersion solvents is carried out and after the washing operation is completed.

The water-absorbent resin (resin from which water has been removed but which contains water because the resin is not dried; gel-like resin) washed with the water and obtained by subjecting the dispersion after the washing operation in the water washing step (3) to an operation of removing water (washing water) using, for example, decantation, filtration with a screen or the like, or centrifugation, and an operation of removing the soluble components, is subjected to the below-described neutralization step (4). The water-absorbent resin washed with water and to be subjected to the neutralization step (4) corresponds to a gel dispersion immediately before being brought into contact with the alkali metal salt in the neutralization step (4). Therefore, the concentration of the insoluble component in the water-absorbent resin washed with water and to be subjected to the neutralization step (4) is used as the "gel concentration of the dispersion before the neutralization step" in the calculation of the below-described washing degree.

2-4. Neutralization Step

The neutralization step (4) in one embodiment of the present invention is a step of neutralizing, with an alkali metal salt, the water-absorbent resin washed with water.

The neutralization step (4) is a step in which the water-absorbent resin washed with water is brought into contact with an alkali metal salt by adding the alkali metal salt to the water-absorbent resin washed with water. In the neutralization step (4), as illustrated in the structural formulae before and after the "neutralization step" in FIG. 1, some of the carboxyl groups in a free acid state in the water-absorbent resin washed with water are neutralized with alkali metal ions derived from the alkali metal salt. More specifically, protons in some of the carboxyl groups in a free acid state are substituted with the alkali metal ions. As described above, the carboxyl group neutralized with the alkali metal ion has a function of absorbing a liquid (excreta or the like). Therefore, in the neutralization step (4), some of the carboxyl groups in the free acid state are neutralized, whereby the water absorption performance of the water-absorbent resin washed with water can be restored.

The alkali metal salt is not particularly limited, and examples thereof include hydroxides, carbonates, and hydrogen carbonates of alkali metals. The alkali metal may be at least one selected from the group consisting of lithium, sodium, and potassium. The alkali metal salt may be a single type or a mixture of a plurality of types of alkali metal salts. The method of adding the alkali metal salt may be a method of adding the alkali metal salt in the form of an aqueous solution of the alkali metal salt prepared by mixing the alkali metal salt with water, or a method of adding the alkali metal salt as a single substance in the form of powder or granules. From the viewpoint of saving energy required for drying in a drying step (5), the alkali metal salt is preferably added as a single substance to the water-absorbent resin washed with water.

The addition amount of the alkali metal salt is preferably from 7 to 14 mmol, more preferably from 8 to 13 mmol, and even more preferably from 9 to 12 mmol per 1 g (solid content) of the water-absorbent resin washed with water. It is known that the recycled water-absorbent resin obtained from the water-absorbent resin neutralized with the alkali metal salt has sufficient water absorption performance when the ratio (neutralization ratio) of the number of neutralized carboxyl groups to the number of all carboxyl groups in the water-absorbent resin neutralized with the alkali metal salt is sufficiently high, specifically about 70%. When the addition amount of the alkali metal salt is equal to or greater than the preferable lower limit value described above, the neutralization ratio in the water-absorbent resin neutralized with the alkali metal salt becomes about 70%, and as a result, a recycled water-absorbent resin having sufficient water absorption performance can be produced.

Meanwhile, from the viewpoint of preventing adverse effects on the human body and improving safety when the recycled water-absorbent resin is handled, the produced recycled water-absorbent resin is desirably prevented from becoming strongly alkaline. The water-absorbent resin neutralized with the alkali metal salt can be prevented from becoming strongly alkaline by setting the addition amount of the alkali metal salt to be equal to or less than the preferable upper limit value described above. As a result, the recycled water-absorbent resin produced from the water-absorbent resin neutralized with the alkali metal salt can be prevented from becoming strongly alkaline.

The addition amount of the alkali metal salt may be adjusted so that the pH of the water-absorbent resin neutralized with the alkali metal salt is kept within a range from 4.5 to 8.0. The pH of the water-absorbent resin neutralized with the alkali metal salt represents the ratio (neutralization ratio) of the number of neutralized carboxyl groups to the number of all carboxyl groups in the water-absorbent resin neutralized with the alkali metal salt. As described above, it is known that when the neutralization ratio is sufficiently high, specifically about 70%, the recycled water-absorbent resin produced from the water-absorbent resin neutralized with the alkali metal salt has sufficient water absorption performance. When the pH of the water-absorbent resin neutralized with the alkali metal salt is 4.5 or higher, the neutralization ratio in the water-absorbent resin neutralized with the alkali metal salt is about 70%, and as a result, a recycled water-absorbent resin having sufficient water absorption performance can be produced.

Meanwhile, as described above, from the viewpoint of preventing adverse effects on the human body and improving safety when the recycled water-absorbent resin is handled, the produced recycled water-absorbent resin is desirably prevented from becoming strongly alkaline. When the pH of the water-absorbent resin neutralized with the alkali metal salt is 8.0 or lower, the produced recycled water-absorbent resin can be prevented from becoming strongly alkaline.

The method for measuring the pH of the water-absorbent resin neutralized with the alkali metal salt is not particularly limited, and for example, the pH can be measured using a commercially available pH test paper and/or a commercially available pH meter.

The treatment time for neutralization by the alkali metal salt is not particularly limited as long as the treatment time is a time sufficient for some of the carboxyl groups in a free acid state in the water-absorbent resin washed with water to be neutralized with the alkali metal ions. The treatment time for the neutralization by the alkali metal salt is preferably from 5 minutes to 2 hours, more preferably from 10 minutes to 1 hour, and even more preferably from 15 minutes to 45 minutes. When the treatment time for neutralization by the alkali metal salt is too short, the neutralization becomes insufficient, and the water absorption performance of the produced recycled water-absorbent resin may be reduced. When the treatment time for neutralization by the alkali metal salt is too long, a more than necessary amount of the alkali metal salt is used, which is not economically preferable. The treatment time for neutralization by the alkali metal salt means a time from the start of the addition of the alkali metal salt to the water-absorbent resin washed with water to the start of a below-described drying step after the water-absorbent resin neutralized with the alkali metal salt is subjected to the drying step.

The reaction temperature for neutralization by the alkali metal salt is not particularly limited as long as the reaction temperature is a temperature sufficient for some of the carboxyl groups in a free acid state in the water-absorbent resin washed with water to be neutralized with the alkali metal ions. The reaction temperature for neutralization by the alkali metal salt is preferably from 5 to 90°C, more preferably from 10 to 80°C, and still more preferably from 15 to 70°C. The alkali metal salt can be added in the form of an aqueous solution or a powder, and as a result, the neutralized product is obtained in the form of a dispersion, a gel-like hydrous product, or a water-absorbent resin. The reaction temperature for neutralization by the alkali metal salt means the temperature of the dispersion, the gel-like hydrous product, or the water-absorbent resin.

Washing Degree

In the method for producing a recycled water-absorbent resin, the acid treatment step (2), the water washing step (3), and the neutralization step (4) are preferably implemented so that the washing degree represented by Equation (1) described below is 10 or higher.

Washing degree = {(gel concentration of dispersion before water washing step)/(gel concentration of dispersion during acid treatment step)} $\times$ {(gel concentration of dispersion before neutralization step)/(gel concentration of dispersion during water washing step)} (1)  (1)

In Equation (1), the "gel concentration" indicates the concentration of the insoluble component (gel) in the dispersion during or before each step, and the insoluble component is a component that is insoluble in water present in the dispersion and is, for example, the water-absorbent resin. Hereinafter, the dispersion containing the gel is also referred to as a gel dispersion. For example, when the gel dispersion is a water-absorbent resin, most of the water-absorbent resin, i.e., most of the gel dispersion becomes the insoluble component.

The gel concentration is defined by Equation (2) described below.

(Gel concentration) = (weight of insoluble component in gel dispersion) [g]/(weight of entire gel dispersion) [g] (2)  (2)

When the gel dispersion is in the form of a dispersion containing a water-absorbent resin, the insoluble component in the gel dispersion is a water-absorbent resin obtained by an operation of filtering the dispersion using a 100-mesh wire net and leaving the filtered product for 1 minute. Even when the gel dispersion is in the form of a water-absorbent resin, the water-absorbent resin is obtained by an operation of placing the gel dispersion on the 100-mesh wire net and allowing the gel dispersion to stand thereon for 1 minute (this operation is implemented to remove the dispersion that seeps out from the water-absorbent resin). Specifically, for example, when the water-absorbent resin treated with the acidic substance is in a state of being extracted from the dispersion in the acid treatment step (2) after completion of the treatment with the acidic substance, the resultant water-absorbent resin treated with the acidic substance is placed on a 100-mesh wire net and allowed to stand for 1 minute, after which the "gel concentration of the dispersion before the water washing step" is calculated using the weight of the water-absorbent resin on the wire net as the weight of the insoluble component. Similarly, the water-absorbent resin obtained in the water washing step (3), i.e., the water-absorbent resin being washed with water and extracted from the dispersion, is placed on a 100-mesh wire net and allowed to stand for 1 minute, after which the weight of the water-absorbent resin on the wire net is used as the weight of the insoluble component to calculate the "gel concentration of the dispersion before the neutralization step". Meanwhile, when the water-absorbent resin treated with the acidic substance is in a state of being present in the dispersion in the acid treatment step (2) after completion of the treatment with the acidic substance, the "gel concentration of the dispersion during the acid treatment step" is calculated on the assumption that the weight of the water-absorbent resin obtained through an operation of filtering the dispersion using a 100-mesh wire net and leaving the filtered product on the wire net for 1 minute is the weight of the insoluble component.

The "gel concentration of the dispersion during the acid treatment step" in Equation (1) is the ratio of the weight of the insoluble component to the weight of the entire dispersion in the acid treatment step (2). The "gel concentration of the dispersion before the water washing step" in Equation (1) is the ratio of the weight of the insoluble component to the weight of the dispersion or entire water-absorbent resin treated with the acidic substance, the dispersion or water-absorbent resin being subjected to the water washing step (3). The "gel concentration of the dispersion during the water washing step" in Equation (1) is the weight of the insoluble component relative to the weight of the entire dispersion in the water washing step (3). The "gel concentration of the dispersion before the neutralization step" in Equation (1) is the ratio of the weight of the insoluble component to the weight of the entire dispersion containing the water-absorbent resin washed with water and to be subjected to the neutralization step (4).

The washing degree correlates with the amount of the dispersion solvent and soluble component removed from the gel dispersion during a period from immediately after the end of the treatment with the acidic substance in the acid treatment step (2) to immediately before the start of the neutralization step (4). The amount of the dispersion solvent and soluble component removed from the gel dispersion means, for example, the weight of the dispersion solvent containing the soluble component in a case in which the dispersion solvent containing the soluble component is to be removed from the gel dispersion. Here, the polyvalent metal ions dissociated by the treatment with the acidic substance are contained in the dispersion solvent. Thus, the washing degree is a parameter that indicates the amount of the polyvalent metal ions removed from the gel dispersion during the period described above. Accordingly, the higher the washing degree, the smaller the amount of the polyvalent metal ions remaining in the resultant recycled water-absorbent resin. As a result, the water absorption performance, particularly the water absorption rate, of the recycled water-absorbent resin is further improved. Therefore, from the viewpoint of further improving the water absorption performance, particularly the water absorption rate, of the recycled water-absorbent resin, a higher washing degree is more preferable.

The above-described matter will now be described in detail with reference to FIG. 2. FIG. 2 illustrates, for each of two examples of the method for producing a recycled water-absorbent resin according to one embodiment of the present invention, the state of the gel dispersion during the acid treatment step, before the water washing step, during the water washing step, and before the neutralization step, and also a method for calculating the washing degree based on the states of the gel dispersion. The rhombuses illustrated in FIG. 2 represent polyvalent metal salt ions contained in the gel dispersion in each step. In the method shown on the upper side of FIG. 2, the gel concentration of the dispersion during the acid treatment step is 10% (0.1), the gel concentration of the dispersion before the water washing step becomes 20% (0.2) due to removal of the solvent (dispersion solvent), after which washing water is added, whereby the gel concentration of the dispersion during the water washing step becomes 5% (0.05), after which the solvent (dispersion solvent) is removed, whereby before the neutralization step, the gel concentration of the dispersion becomes 20% (0.2). As indicated by the equation at the top right of FIG. 2, the washing degree in the method shown on the upper side of FIG. 2 is 8. Meanwhile, the method depicted on the lower side of FIG. 2 is the same as the method depicted on the upper side of FIG. 2 with the exception that the operation of removing the dispersion solvent from the gel dispersion during the acid treatment step is not carried out, and the gel concentration of the dispersion before the water washing step is 10% (0.1), which is unchanged from the gel concentration of the dispersion during the acid treatment step. As indicated by the equation at the bottom right of FIG. 2, the washing degree in the method depicted on the upper side of FIG. 2 is 4. That is, the ratio of the washing degree of the method illustrated on the upper side of FIG. 2 to the washing degree of the method illustrated on the lower side of FIG. 2 is 8:4, which equals 2:1. In addition, as illustrated in FIG. 2, as the ratio of the method illustrated on the upper side of FIG. 2 to the method illustrated on the lower side of FIG. 2, the amount of polyvalent metal ions, that is, the number of rhombuses, contained in the gel dispersion before the neutralization step is 1:2. Therefore, theoretically, when the washing degree is n times, the amount of polyvalent metal ions contained in the gel dispersion before the neutralization step, i.e., the amount of polyvalent metal ions remaining in the recycled water-absorbent resin is considered to be 1/n times, which is the reciprocal of n. From the above, it can be understood that the higher the washing degree, the smaller the amount of polyvalent metal ions remaining in the obtained recycled water-absorbent resin.

Specifically, the washing degree is preferably 10 or higher, more preferably 11 or higher, and even more preferably 12 or higher, 20 or higher, 30 or higher, 40 or higher, 50 or higher, 60 or higher, 70 or higher, 80 or higher, 90 or higher, 100 or higher, or 200 or higher. The washing degree can be increased by increasing the amount of the dispersion solvent (e.g., washing water) used in the acid treatment step (2) and/or the water washing step (3) and removing more of the dispersion solvent and/or washing water. When the washing degree is excessively high, the amount of the dispersion solvent used must be excessively increased, and as a result, the cost excessively increases. Thus, from the viewpoint of preventing an excessive increase in the cost, the washing degree is preferably 500 or less, more preferably 300 or less, and even more preferably 250 or less. From the viewpoint of preventing an excessive increase in the cost, the washing degree may be 200 or less.

A concentrating step may be included between the water washing step (3) and the neutralization step (4) to increase the solid content concentration in the above-described water-absorbent resin aqueous dispersion (e.g., the dispersion in the water washing step (3) and/or the dispersion containing the water-absorbent resin washed with water and to be subjected to the neutralization step (4)). The concentrating method is not particularly limited. The concentrating method is preferably, for example, a method by which the concentration of the water-absorbent resin aqueous dispersion can be increased by using a solid-liquid separation mechanism through which water can be passed, such as a wedge wire screen. The treatment efficiency and/or the drying efficiency in the neutralization step (4) and/or the drying step (5) can be improved by carrying out this concentrating step.

2-5. Drying Step

The drying step (5) in one embodiment of the present invention is a step of drying the water-absorbent resin neutralized with the alkali metal salt, and thereby producing a recycled water-absorbent resin.

The drying step (5) is a step of drying, to a desired water content, the water-absorbent resin neutralized with the alkali metal salt, and thereby producing a recycled water-absorbent resin as a dried polymer. The water content is determined from a change in weight when 1 g of the water-absorbent resin is dried by heating at 180°C for 3 hours. Specifically, the water content is expressed by Equation (3) described below.

Water content [wt.%] = [1 - {(weight [g] of water-absorbent resin after drying operation)/(weight [g] of water-absorbent resin before drying operation)}] × 100 (3)

(3)

The water content of the recycled water-absorbent resin is preferably from 5 to 30 wt.%, more preferably from 7 to 25 wt.%, and still more preferably from 10 to 25 wt.%.

The recycled water-absorbent resin having a water content of 5 wt.% or more has a further improved water absorption rate in comparison to the recycled water-absorbent resin having a water content of less than 5 wt.%. The effect of the water absorption rate of the water-absorbent resin being further improved by setting the water content to a specific value or higher is more remarkably exhibited in the recycled water-absorbent resin as compared with the water-absorbent resin before use. When the water content is 30 wt.% or less, the amount of a liquid such as water or excreta that can be absorbed by the recycled water-absorbent resin is increased, and the water absorbency is further improved.

The water content of the recycled water-absorbent resin is measured by the EDANA method (ERT 430.2-02) with the sample amount being changed to 1.0 g and the drying temperature being changed to 180°C.

The method for drying the water-absorbent resin neutralized with the alkali metal salt is not particularly limited, and examples thereof include heated drying, hot air drying, reduced pressure drying, fluidized bed drying, infrared drying, microwave drying, and drum dryer drying.

From the viewpoint of the color tone and/or drying efficiency of the produced recycled water-absorbent resin, the drying temperature in the drying step (5) is preferably from 120 to 250°C, and more preferably from 150 to 200°C.

For example, in a case in which the drying step (5) is carried out using hot air drying, the drying temperature means the temperature of hot air blown onto the water-absorbent resin neutralized with the alkali metal salt. When a method other than hot air drying is employed among the drying methods exemplified above, the drying temperature means the temperature inside the heating apparatus, specifically the temperature of the atmosphere inside the heating apparatus.

The lower limit value of the drying time in the drying step (5) is preferably 5 minutes or longer, more preferably 10 minutes or longer, even more preferably 15 minutes or longer, yet even more preferably 20 minutes or longer, still even more preferably 25 minutes or longer, and yet even more preferably 30 minutes or longer. The upper limit value of the drying time in the drying step (5) is preferably 180 minutes or less, more preferably 120 minutes or less, even more preferably 90 minutes or less, and yet even more preferably 60 minutes or less. A recycled water-absorbent resin having a water content in the above-mentioned preferable range can be suitably produced by drying the neutralized water-absorbent resin at a drying temperature in a range from the above-mentioned preferable lower limit value to the above-mentioned preferable lower limit value for the above-mentioned preferable drying time.

In the drying step (5), examples of the method for producing the recycled water-absorbent resin include a method in which the dried product obtained as a result of the above-described drying treatment is recovered as is as the recycled water-absorbent resin. Another method for producing the recycled water-absorbent resin is a method in which a water-absorbent resin obtained by pulverizing and/or classifying the dried product is recovered as a recycled water-absorbent resin. The pulverization method is not particularly limited, and for example, a pulverization method using a vibration mill can be employed. The classification method is not particularly limited, and for example, a method can be employed in which a sieve having 600 μm openings and a sieve having 300 μm openings are used, and the water-absorbent resin that passes through the sieve having 600 μm openings but remains on the sieve having 300 μm openings is recovered as a recycled water-absorbent resin.

The calcium content (Ca content) of the produced recycled water-absorbent resin is preferably 1.1 wt.% or less. By setting the calcium content to 1.1 wt.% or less, the water absorption performance such as CRC and/or the water absorption rate of the produced recycled water-absorbent resin is improved, and as a result, a recycled water-absorbent resin having water absorption performance closer to that of the water-absorbent resin before use can be produced. The calcium content of the produced recycled water-absorbent resin is preferably 1.0 wt.% or less, 0.9 wt.% or less, 0.8 wt.% or less, 0.7 wt.% or less, 0.6 wt.% or less, 0.5 wt.% or less, 0.4 wt.% or less, 0.3 wt.% or less, 0.2 wt.% or less, 0.15 wt.% or less, or 0.10 wt.% or less.

3. Recycled Water-Absorbent Resin

Applications of Recycled Water-Absorbent Resin

Applications of the recycled water-absorbent resin produced by the production method of the present invention are not particularly limited, and preferable examples thereof include use as an absorbent body of an absorbent article such as a disposable diaper (for infants and adults), a sanitary napkin, and an incontinence pad. Other examples of absorbent articles in which the recycled water-absorbent resin can be used as an absorbent body include water retention materials, soil water retention materials, seedling-raising sheets, seed-coating materials, moisture absorbents, condensation prevention sheets, drip-absorbing materials, freshness-retaining materials, printer ink absorbents, disposable handwarmers, water bags, cooling bandanas, ice packs, liquid medical waste solidifying agents, liquid dental waste treatment agents, liquid food waste solidifying agents, iron ore slurry handling improvers, mud handling improvers, residual soil solidification materials, agents for the treatment of (radiation-containing) waste from nuclear power generation, water liquid waste gelling agents for damage prevention, water-absorbing sandbags, portable toilets for disasters, poultice materials, thickeners for cosmetics, water-stopping materials for electrical and electronic materials and communication cables, gasket packings, sustained-release agents for fertilizers, various sustained-release agents (space disinfectants, air fresheners, etc.), deodorants, pet sheets, cat litter, dressing materials for wound protection, construction materials for condensation prevention, agents for removing moisture from oil, paints, adhesives, anti-blocking agents, light-diffusing agents, separators for alkaline batteries, matting agents, and resin additives such as additives for decorative panels, additives for artificial marble, and additives for toners.

4. Method for Determining Production Conditions in Method for Producing Recycled Water-Absorbent Resin

A method for determining production conditions in the method for producing a recycled water-absorbent resin according to one embodiment of the present invention is a method for determining production conditions in the method for producing a recycled water-absorbent resin from a water-absorbent resin contained in a used absorbent article, wherein the water-absorbent resin contains a polymer having partially neutralized carboxyl groups, the method for producing a recycled water-absorbent resin includes a dehydration step (1) of treating the water-absorbent resin with a polyvalent metal salt; an acid treatment step (2) of treating, with an acidic substance, the water-absorbent resin treated with the polyvalent metal salt; a water washing step (3) of washing with water the water-absorbent resin treated with the acidic substance; a neutralization step (4) of neutralizing, with an alkali metal salt, the water-absorbent resin washed with water; and a drying step (5) of drying the water-absorbent resin neutralized with the alkali metal salt and thereby producing a recycled water-absorbent resin, and the method for determining production conditions in the method for producing a recycled water-absorbent resin includes determining an end point of the acid treatment step (2) on the basis of the pH of a dispersion of the water-absorbent resin treated with the polyvalent metal salt and containing the acidic substance added during the acid treatment step (2).

For each of the "dehydration step (1)", the "acid treatment step (2)", the "water washing step (3)", the "neutralization step (4)", and the "drying step (5)", the above-described matters relating to each step in the method for producing a recycled water-absorbent resin according to one embodiment of the present invention can be applied in the method for determining production conditions for the method for producing a recycled water-absorbent resin.

Specifically, the end point of the acid treatment step (2) can be determined by the following method based on the pH of the dispersion of the water-absorbent resin treated with the polyvalent metal salt and containing the acidic substance added during the acid treatment step (2). Here, the dispersion of the water-absorbent resin treated with the polyvalent metal salt and containing the acidic substance added during the acid treatment step (2) may be a dispersion to which the acidic substance is gradually added from the start of the acid treatment step (2) in the method described below. Alternatively, the dispersion of the water-absorbent resin treated with the polyvalent metal salt and containing the acidic substance added during the acid treatment step (2) may be, besides the above-described dispersion to which the acidic substance is gradually added, a dispersion to which an acidic substance is further appropriately added after the initial addition of the acidic substance is temporarily stopped (e.g., a dispersion to which an acidic substance is additionally added if the pH of the dispersion does not fall within the target pH range).

That is, in the acid treatment step (2), while the pH is measured, the acidic substance is gradually added to the prepared dispersion of the water-absorbent resin treated with the polyvalent metal salt. Subsequently, at the point in time at which the pH reaches the target value, addition of the acidic substance is temporarily stopped, and then during the period in which the acid treatment is carried out, the acidic substance is appropriately added so that the pH falls within the target range. The method for measuring the pH is not particularly limited, and for example, the pH can be measured using a commercially available pH test paper and/or a commercially available pH meter. The end point of the acid treatment step (2) means the point in time at which addition of the acidic substance is completely finished.

Therefore, determining the end point of the acid treatment step (2) on the basis of the pH of the dispersion when the acidic substance is added means determining the amount of the acidic substance to be added so that the pH of the dispersion becomes the target value. The addition amount of the acidic substance corresponds to a production condition in the method for producing the recycled water-absorbent resin.

Therefore, through application of the production condition determining method, in the acid treatment step (2) of the method for producing a recycled water-absorbent resin, the acidic substance can be added to the dispersion of the water-absorbent resin treated with the polyvalent metal salt so that the pH of the dispersion becomes a target value.

The target value of the pH is from -1.0 to 3.0, preferably from 0 to 2.8, and more preferably from 0.5 to 2.5 (from 0.6 to 2.3, or from 0.8 to 2.0).

Therefore, as described in the section "2-2. Acid Treatment Step" of "2. Method for Producing Recycled Water-Absorbent Resin", through application of the method for determining production conditions to be used in the method for producing a recycled water-absorbent resin, the water absorption performance of the produced recycled water-absorbent resin can be improved, and an excessive increase in cost due to the use of more than the necessary amount of the acidic substance can be prevented.

The method for determining production conditions in the method for producing a recycled water-absorbent resin according to an embodiment of the present invention preferably further includes determining the end point of the water washing step (3) on the basis of the ratio (E1/E0) of an extraction liquid electrical conductivity E1 of the water-absorbent resin washed with water and obtained in the water washing step (3) to an extraction liquid electrical conductivity E0 of the water-absorbent resin treated with the acidic substance and obtained in the acid treatment step (2).

Specifically, determination of the end point of the water washing step (3) on the basis of the ratio (E1/E0) can be carried out by the following method. In the determination described above, the extraction liquid electrical conductivity E1 of the water-absorbent resin washed with water includes not only the extraction liquid electrical conductivity of the water-absorbent resin washed with water and obtained after implementation of the water washing step (3), but also the extraction liquid electrical conductivity of the water-washed water-absorbent resin in the middle of the water washing step (3). The end point of the water washing step (3) means a point of time at which washing with water is completed and before an operation of extracting the water-absorbent resin washed with water is implemented.

Before the water washing step (3) is implemented, the extraction liquid electrical conductivity E0 of the water-absorbent resin treated with the acidic substance is measured in advance. Subsequently, the extraction liquid electrical conductivity E1 of the washed water-absorbent resin obtained as a result of the washing operation is measured under specific conditions. Whether the E1/E0 ratio reaches the target value is then confirmed. When the ratio of E1/E0 reaches the target value, the point in time thereof is defined as the end point of the water washing step (3). Meanwhile, when the ratio of E1/E0 does not reach the target value, the washing operation is repeated under specific conditions until the ratio of E1/E0 reaches the target value, or the amount of washing water is increased.

Therefore, determining the end point of the water washing step (3) on the basis of the ratio (E1/E0) means determining the conditions in the washing operation (e.g., the number of times of implementation of the washing operation, the type of water to be used, the amount of water to be used, and the temperature during the washing operation) so that the ratio (E1/E0) becomes the target value. Here, the conditions in the washing operation correspond to the production conditions in the method for producing the recycled water-absorbent resin.

Accordingly, through application of determination of the end point of the water washing step (3) on the basis of the ratio (E1/E0), the washing operation can be carried out in the water washing step (3) so that the ratio (E1/E0) of the extraction liquid electrical conductivity E1 of the water-absorbent resin washed with water and obtained in the water washing step (3) to the extraction liquid electrical conductivity E0 of the water-absorbent resin treated with the acidic substance and obtained in the acid treatment step (2) becomes a target value.

The target value of the ratio (E1/E0) is preferably less than 0.40, more preferably 0.35 or less, and even more preferably 0.30 or less (0.25 or less, 0.20 or less, or 0.15 or less). The lower limit value of the target value of the ratio (E1/E0) is preferably 0.05, 0.08, or 0.10 from the viewpoints of being able to suppress the amount of washing water used and being advantageous in terms of cost.

Therefore, as described in the section "2-3. Water Washing Step" of "2. Method for Producing Recycled Water-Absorbent Resin" above, through application of determination of the end point of the water washing step (3) on the basis of the ratio (E1/E0), the water absorption performance (e.g., the water absorbency without pressurization (CRC) and/or the water absorption rate) of the produced recycled water-absorbent resin can be more suitably improved.

The extraction liquid electrical conductivity EO and the extraction liquid electrical conductivity E1 are measured by the method described in section "2-3. Water Washing Step" under the section heading "2. Method for Producing Recycled Water-Absorbent Resin".

An embodiment of the present invention may include inventions described in [1] to [10] below.

[1] A method for producing a recycled water-absorbent resin from a water-absorbent resin contained in a used absorbent article,

the water-absorbent resin containing a polymer having partially neutralized carboxyl groups, and
the method including:

a dehydration step (1) of treating the water-absorbent resin with a polyvalent metal salt;
an acid treatment step (2) of treating, with an acidic substance, the water-absorbent resin treated with the polyvalent metal salt;
a water washing step (3) of washing with water the water-absorbent resin treated with the acidic substance;
a neutralization step (4) of neutralizing, with an alkali metal salt, the water-absorbent resin washed with water; and
a drying step (5) of drying the water-absorbent resin neutralized with the alkali metal salt and thereby producing a recycled water-absorbent resin.

[2] The method for producing a recycled water-absorbent resin according to [1], wherein the acid treatment step (2), the water washing step (3), and the neutralization step (4) are implemented so that a washing degree represented by Equation (1) described below is 10 or higher:

washing degree = {(gel concentration of dispersion before water washing step)/(gel concentration of dispersion during acid treatment step)} × {(gel concentration of dispersion before neutralization step)/(gel concentration of dispersion during water washing step)} (1).  (1).

[3] The method for producing a recycled water-absorbent resin according to [1] or [2], wherein the acid treatment step (2) includes a step of adding the acidic substance to a dispersion of the water-absorbent resin treated with the polyvalent metal salt so that the pH of the dispersion is from -1.0 to 3.0.

[4] The method for producing a recycled water-absorbent resin according to any one of [1] to [3], wherein, in the dehydration step (1),
the polyvalent metal salt is a salt of an alkaline earth metal.

[5] The method for producing a recycled water-absorbent resin according to any one of [1] to [4], wherein, in the acid treatment step (2),
the acidic substance is one or more acids selected from the group consisting of an organic acid and an inorganic acid.

[6] The method for producing a recycled water-absorbent resin according to any one of [1] to [5], wherein

the water washing step (3) includes a step of washing with water the water-absorbent resin treated with the acidic substance so that a ratio (E1/E0) of an extraction liquid electrical conductivity E1 of the water-absorbent resin washed with water and obtained in the water washing step (3) to an extraction liquid electrical conductivity E0 of the water-absorbent resin treated with the acidic substance and obtained in the acid treatment step (2) is less than 0.40
(in the acid treatment step (2) or the water washing step (3), when the water-absorbent resin is obtained in a state of being present in a dispersion, the extraction liquid electrical conductivity of the water-absorbent resin is measured by a method including steps (i) to (iii) described below:

(i) a step of obtaining a filtered water-absorbent resin by implementing an operation of using a 100-mesh wire net to filter the dispersion of the water-absorbent resin obtained in the acid treatment step (2) or the water washing step (3) and leaving the filtered product for 1 minute;

(ii) a step of obtaining an extraction liquid by adding the filtered water-absorbent resin obtained in step (i) and deionized water having a weight four times the weight of the filtered water-absorbent resin to a beaker, and stirring the mixture with a stirrer at a temperature of 25°C for 20 minutes; and

(iii) a step of measuring, with an electrical conductivity meter, the electrical conductivity of the extraction liquid obtained in step (ii);

in the acid treatment step (2) or the water washing step (3), when the water-absorbent resin is obtained in a state of being removed from the dispersion, the extraction liquid electrical conductivity of the water-absorbent resin is measured by a method including steps (iv) and (v) described below:

(iv) a step of obtaining an extraction liquid by adding the water-absorbent resin obtained in the acid treatment step (2) or the water washing step (3) and deionized water having a weight four times the weight of the water-absorbent resin to a beaker, and stirring the mixture with a stirrer at a temperature of 25°C for 20 minutes; and

(v) a step of measuring, with an electrical conductivity meter, the electrical conductivity of the extraction liquid obtained in step (iv)).

[7] The method for producing a recycled water-absorbent resin according to any one of [1] to [6], wherein a water content of the recycled water-absorbent resin is from 5 to 30 wt.%.

[8] The method for producing a recycled water-absorbent resin according to any one of [1] to [7], wherein the water used in the water washing step (3) is water having an electrical conductivity of 50 mS/cm or less.

[9] A method for determining production conditions in a method for producing a recycled water-absorbent resin from a water-absorbent resin contained in a used absorbent article,

the water-absorbent resin containing a polymer having partially neutralized carboxyl groups,

the method for producing a recycled water-absorbent resin including:

a dehydration step (1) of treating the water-absorbent resin with a polyvalent metal salt;

an acid treatment step (2) of treating, with an acidic substance, the water-absorbent resin treated with the polyvalent metal salt;

a water washing step (3) of washing with water the water-absorbent resin treated with the acidic substance;

a neutralization step (4) of neutralizing, with an alkali metal salt, the water-absorbent resin washed with water; and

a drying step (5) of drying the water-absorbent resin neutralized with the alkali metal salt and thereby producing a recycled water-absorbent resin, and

the method for determining production conditions in the method for producing a recycled water-absorbent resin including determining an end point of the acid treatment step (2) on the basis of the pH of a dispersion of the water-absorbent resin treated with the polyvalent metal salt and containing the acidic substance added during the acid treatment step (2).

[10] The method for determining production conditions according to [9], further including determining an end point of the water washing step (3) on the basis of a ratio (E1/E0) of an extraction liquid electrical conductivity E1 of the water-absorbent resin washed with water and obtained in the water washing step (3) to an extraction liquid electrical conductivity E0 of the water-absorbent resin treated with the acidic substance and obtained in the acid treatment step (2)

(in the acid treatment step (2) or the water washing step (3), when the water-absorbent resin is obtained in a state of being present in a dispersion, the extraction liquid electrical conductivity of the water-absorbent resin is measured by a method including steps (i) to (iii) described below:

(i) a step of obtaining a filtered water-absorbent resin by implementing an operation of using a 100-mesh wire net to filter the dispersion of the water-absorbent resin obtained in the acid treatment step (2) or the water washing step (3) and leaving the filtered product for 1 minute;

(ii) a step of obtaining an extraction liquid by adding the filtered water-absorbent resin obtained in step (i) and deionized water having a weight four times the weight of the filtered water-absorbent resin to a beaker, and stirring the mixture with a stirrer at a temperature of 25°C for 20 minutes; and

(iii) a step of measuring, with an electrical conductivity meter, the electrical conductivity of the extraction liquid obtained in step (ii);

in the acid treatment step (2) or the water washing step (3), when the water-absorbent resin is obtained in a state of being removed from the dispersion, the extraction liquid electrical conductivity of the water-absorbent resin is measured by a method including steps (iv) and (v) described below:

(iv) a step of obtaining an extraction liquid by adding the water-absorbent resin obtained in the acid treatment step (2) or the water washing step (3) and deionized water having a weight four times the weight of the water-absorbent resin to a beaker, and stirring the mixture with a stirrer at a temperature of 25°C for 20 minutes; and
(v) a step of measuring, with an electrical conductivity meter, the electrical conductivity of the extraction liquid obtained in step (iv)).

The present invention is not limited to the above-described embodiments, and various modifications can be made within the scope set forth by the claims, and embodiments obtained by appropriately combining technical means disclosed in different embodiments are also included in the technical scope of the present invention.

Examples

Evaluation Methods

The water absorption performance and water content of the recycled water-absorbent resins produced in Examples 1 to 24, Comparative Examples 1 to 3, and Referential Example 1 were evaluated by the following methods.

Water Content

The water content of a water-absorbent resin (water-absorbing agent) was measured in accordance with the EDANA method (ERT 430.2-02). In the present invention, the measurement was carried out with the sample amount changed to 1.0 g and the drying temperature changed to 180°C.

Water Absorbency Without Pressurization (CRC)

The term "CRC" regarding the water-absorbent resin of the present invention is an abbreviation for centrifuge retention capacity, and indicates the capacity of the water-absorbent resin to absorb 0.90 wt.% of salt water in 30 minutes without pressurization. Specifically, the "CRC" of the water-absorbent resin was measured by the following measurement method.

0.200 g of a water-absorbent resin was uniformly placed in a bag (85 mm $\times$ 60 mm) made of a nonwoven fabric (trade name: Heatron Paper, model: GSP-22, available from Nangoku Pulp Industry Co., Ltd.), heat-sealed, and then immersed in a large excess (usually about 500 ml) of 0.90 wt.% aqueous sodium chloride solution at room temperature. After the lapse of 30 minutes, the bag was removed from the solution and drained for 3 minutes using a centrifuge (available from Kokusan Co., Ltd., centrifuge model H-122) at the centrifugal force (250 G) described in Edana ABSORBENCY II 441.1-99, after which the weight W1 (g) of the bag was measured. The same operation was carried out without using the water-absorbent resin, and the weight WO (g) of the bag at that time was measured. From these weights W1 and WO, the centrifuge retention capacity (CRC) (g/g) was calculated according to Equation (4) described below.

$$\text{CRC (g/g)} = [\{\text{W1 (g) - W0 (g)}\}/\{\text{weight (g) of water-absorbent resin}\}] - 1 \ (4)$$

Water Absorption Rate

0.02 parts by weight of Food Blue No. 1, which is a food additive, was added to 1000 parts by weight of 0.90 wt.% aqueous sodium chloride solution (physiological saline), and the liquid temperature was adjusted to 22°C. Next, 50 ml of the physiological saline was weighed into a 100 ml beaker, and 2.0 g of a sample was added to the beaker with stirring at 600 rpm using a cylindrical stirring bar having a length of 40 mm and a thickness (diameter of a cross section perpendicular to the length direction of the cylinder) of 8 mm, and the vortex (water absorption rate: seconds) of the sample (water-absorbent resin) was measured. The end point of the measurement of the vortex (water absorption rate) was measured in accordance with the standard described in JIS K 7224-1996 "Testing Method for Water Absorption Rate of Super Absorbent Polymers, Explanation", and the time (vortex) required for the sample (water-absorbent resin particles, water-absorbent resin particle composition, etc.) to absorb the physiological saline and cover the stirrer chip with the test solution was measured as the water absorption rate (seconds).

Ca Content

As a pretreatment for analysis, the water-absorbent resin was dissolved in a nitric acid solution (ultra-high purity reagent 1.38 Ultrapure, available from Kanto Chemical Co., Inc.) using a microwave sample pretreatment device (product name: ETHOS UP, available from Milestone General K.K.), and the resultant solution was used as a measurement sample. The calcium ions contained in the water-absorbent resin were quantified in the measurement sample using an ICP emission spectrometer (iCAP 6500 Duo, available from Thermo Fisher Scientific Inc.) under the following conditions.

Measurement mode: Axial (axial photometry)
Detection wavelength: 317.9 nm
RF power: 1150 W
Pump flow rate: 50 rpm
Auxiliary gas: 1 L/min
Nebulizer gas: 0.65 L/min
Coolant gas: 12 L/min
Additive gas: 0 L/min
Purge gas: 5 L/min

Calibration was performed by an internal standard method (Y) using a calcium standard solution (Ca 1000, available from Kanto Chemical Co., Inc.). When the concentration of the standard solution was to be adjusted and/or the concentration of the measurement sample was to be adjusted, ultrapure water obtained by a pure water production apparatus (RF464BB available from Advantec Co., Ltd.) was used.

Production Example 1: Production of Water-Absorbent Resin Treated with Polyvalent Metal Salt

150 g of physiological saline was added to an "Attento" disposable diaper for adults (available from Daio Paper Corporation) to cause the water-absorbent resin contained therein to swell, and the diaper was left overnight to simulate a used disposable diaper.

5000 g of 0.5 wt.% aqueous calcium chloride solution was added to a container having a volume of 10 L. Next, the used disposable diaper was cut with scissors into 5 cm square pieces. Subsequently, the cut, used disposable diaper was added to the container to prepare a dispersion (1), and the dispersion (1) was stirred for 30 minutes under conditions including a stirring speed of 500 rpm and a temperature of 25°C to disperse the cut disposable diaper in the liquid (dehydration step of dehydrating the water-absorbent resin in the used disposable diaper).

After dispersion of the cut disposable diaper in the liquid with stirring, it was confirmed that the water-absorbent resin treated with the polyvalent metal salt present in the dispersion (1) was dehydrated. Specifically, it was visually confirmed that the water-absorbent resin treated with the polyvalent metal salt shrank as compared with the water-absorbent resin contained in the cut, used disposable diaper.

Next, the water-absorbent resin treated with the polyvalent metal salt was separated and recovered from the bottom of the container by using the difference in specific gravity between the water-absorbent resin treated with the polyvalent metal salt and the other constituent materials of the disposable diaper. The recovered water-absorbent resin treated with the polyvalent metal salt is referred to as a water-absorbent resin (1) treated with the polyvalent metal salt. The solid content concentration of the resultant water-absorbent resin (1) treated with the polyvalent metal salt was 14.5 wt.%. In other words, the water content of the water-absorbent resin (1) treated with the polyvalent metal salt was 85.5 wt.%.

Production of Recycled Water-Absorbent Resin

Comparative Example 1

A dispersion (2) was obtained by adding 50.0 g of the water-absorbent resin (1) treated with the polyvalent metal salt and obtained in Production Example 1 and 334.7 g of tap water to a reaction container. To the dispersion (2), 15.3 g of 6M aqueous hydrochloric acid solution was gradually added with stirring under conditions including a stirring speed of 500 rpm and a temperature of the dispersion (2) of 25°C. Subsequently, stirring was continued for 15 minutes under the same conditions as described above. The total weight of the contents was 400 g as indicated below. Subsequently, an operation (filtration operation) of filtering the contents (dispersion (2) after the addition of the 6M aqueous hydrochloric acid solution) using a 100-mesh stainless steel wire net, and then leaving the water-absorbent resin obtained on the stainless steel wire net standing thereon for 1 minute was carried out, whereby 73.6 g of an acidic substance-treated water-absorbent resin (1) was obtained. The acid treatment step and the filtration operation were carried out by the methods described above.

The acidic substance-treated water-absorbent resin (1) was placed into a container separate from the reaction container. While the acidic substance-treated water-absorbent resin (1) was stirred with a spatula, 3.10 g of sodium carbonate powder was gradually added thereto, and stirring was further continued for 2 minutes. After completion of the addition of the sodium carbonate powder, the acidic substance-treated water-absorbent resin (1) to which the sodium carbonate powder was added was left standing for 20 minutes at a temperature of 25°C. As a result, a neutralized water-absorbent resin (1) was obtained. The time (treatment time for neutralization) from the time at which the addition of the sodium carbonate powder was started until prior to the completion of the mixture being left standing was approximately 23 minutes. The neutralization step was carried out by the above method.

Subsequently, the resultant neutralized water-absorbent resin (1) was spread on the bottom surface of a stainless steel tray, and the stainless steel tray was placed in a hot-air circulating oven in which the temperature of hot air was set to 180°C. Subsequently, in the hot-air circulating oven, the neutralized water-absorbent resin (1) was subjected to a drying treatment for a drying time of 60 minutes, whereby a dried product (1) was obtained. Next, the obtained dried product (1) was pulverized using a vibration mill, and then classified using a sieve having 600 $\mu$m openings and a sieve having 300 $\mu$m openings, and the dried product (1) that passed through the sieve having 600 $\mu$m openings but remained on the sieve having 300 $\mu$m openings was recovered as a recycled water-absorbent resin (1) for comparison. The drying step was carried out by the method described above.

The obtained recycled water-absorbent resin (1) for comparison had a water content of 3.0 wt.%, a CRC of 31.2 (g/g), and a vortex (water absorption rate) of 300 (sec) or more.

In the acid treatment step in Comparative Example 1, the total weight of the dispersion in the acid treatment step (2) after completion of the treatment with the acidic substance was 50.0 + 334.7 + 15.3 = 400.0 g. The insoluble component in the dispersion in the acid treatment step (2) after completion of the treatment with the acidic substance was the acidic substance-treated water-absorbent resin (1) obtained by the acid treatment step and the filtration operation in Comparative Example 1, and the weight thereof was 73.6 g. Therefore, the value of the "gel concentration of the dispersion during the acid treatment step" in Comparative Example 1 was 73.6/400.0 = 0.184. The "gel dispersion before the water washing step" in Comparative Example 1 was the acidic substance-treated water-absorbent resin (1), which was the insoluble component. Therefore, since the total weight of the "gel dispersion before the water washing step" was the same as the weight of the insoluble component, the "gel concentration of the dispersion before the water washing step" in Comparative Example 1 was 1. In Comparative Example 1, the "gel concentration of the dispersion during the water washing step" and the "gel concentration of the dispersion before the neutralization step" were calculated on the assumption that the water washing step was implemented without implementing any other operation. In Comparative Example 1, both the "gel dispersion during the water washing step" and the "gel dispersion before the neutralization step" were the water-absorbent resin (1) treated with the acidic substance and filtered, which was the insoluble component. Therefore, in Comparative Example 1, the total weight of the "gel dispersion during the water washing step" and the weight of the insoluble component, and the total weight of the "gel dispersion before the neutralization step" and the weight of the insoluble component were all the same. Accordingly, in Comparative Example 1, both the "gel concentration of the dispersion during the water washing step" and the "gel concentration of the dispersion before the neutralization step" were 1. From the above, the washing degree in Comparative Example 1 was (1/0.184) $\times$ (1/1) $\approx$ 5.4.

Example 1

The acid treatment step and the filtration operation were carried out in the same manner as in Comparative Example 1, whereby 72.0 g of an acidic substance-treated water-absorbent resin (2) was obtained.

Subsequently, the acidic substance-treated water-absorbent resin (2) was returned to the reaction container used in the acid treatment step, and 40.0 g of tap water was newly added, to yield a dispersion (3). The dispersion (3) was stirred for 5 minutes under conditions including a stirring speed of 500 rpm and a temperature of 25°C. The total weight of the contents (dispersion (3) after stirring) was 112 g as described below. Subsequently, an operation (filtration operation) of filtering the contents using a 100-mesh stainless steel wire net, and then leaving the water-absorbent resin obtained on the stainless steel wire net standing thereon for 1 minute was carried out, whereby 76.1 g of a water-absorbent resin (1) washed with water was obtained. The water washing step and the filtration operation were carried out in the manner described above.

Subsequently, the neutralization step and the drying step were carried out in the same manner as in Comparative Example 1 with the exception that the water-absorbent resin (1) washed with water was used instead of the water-absorbent resin (1) treated with the acidic substance. As a result, a recycled water-absorbent resin (1) was obtained.

The obtained recycled water-absorbent resin (1) had a water content of 3.0 wt.%, a CRC of 34.5 (g/g), and a vortex (water absorption rate) of 300 (sec) or more.

In the acid treatment step in Example 1, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (2) obtained by the acid treatment step and the filtration operation in Example 1, and the weight thereof was 72.0 g. Therefore, the value of the "gel concentration of the dispersion during the acid treatment step" in Example 1 was 72.0/400.0 = 0.180. In Example 1, the "gel concentration of the dispersion before the water washing step" was 1, which was similar to the result obtained in Comparative Example 1. In the water washing step in Example 1, the total weight of the entire dispersion in the water washing step (3) was 72.0 + 40.0 = 112.0 g. The insoluble component in the dispersion in the water washing step (3) was the water-washed water-absorbent resin (1) obtained by the water washing step and the filtration operation in Example 1, and the weight thereof was 76.1 g. Therefore, the value of the "gel concentration of the dispersion during the water washing step" in Example 1 was 76.1/112.0 ≈ 0.679. The "gel dispersion before the neutralization step" in Example 1 was the water-washed water-absorbent resin (1), which was the insoluble component. Therefore, the total weight of the "gel dispersion before the neutralization step" was the same as the weight of the insoluble component, and thus the "gel concentration of the dispersion before the neutralization step" in Example 1 was 1. From the above, the washing degree in Example 1 was (1/0.18) × (1/0.679) ≈ 1/0.122 ≈ 8.2.

Example 2

The acid treatment step and the filtration operation were carried out in the same manner as in Comparative Example 1, whereby 71.9 g of an acidic substance-treated water-absorbent resin (3) was obtained.

Subsequently, the acidic substance-treated water-absorbent resin (3) was returned to the reaction container used in the acid treatment step, and 83.0 g of tap water was newly added, to yield a dispersion (4). The dispersion (4) was stirred for 5 minutes under conditions including a stirring speed of 500 rpm and a temperature of 25°C. The total weight of the contents (dispersion (4) after stirring) was 154.9 g as described below. Subsequently, an operation of filtering the contents using a 100-mesh stainless steel wire net, and then leaving the water-absorbent resin obtained on the stainless steel wire net standing thereon for 1 minute was carried out, whereby 77.4 g of a water-absorbent resin (2) washed with water was obtained. The water washing step and the filtration operation were carried out in the manner described above.

Subsequently, the neutralization step and the drying step were carried out in the same manner as in Comparative Example 1 with the exception that the water-absorbent resin (2) washed with water was used instead of the water-absorbent resin (1) treated with the acidic substance. As a result, a recycled water-absorbent resin (2) was obtained.

The obtained recycled water-absorbent resin (2) had a water content of 3.7 wt.%, a CRC of 42.1 (g/g), and a vortex (water absorption rate) of 146 (sec).

In the acid treatment step in Example 2, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (3) obtained by the acid treatment step and the filtration operation in Example 2, and the weight thereof was 71.9 g. Therefore, the value of "the gel concentration of the dispersion during the acid treatment step" in Example 2 was 71.9/400.0 ≈ 0.180. In Example 2, the "gel concentration of the dispersion before the water washing step" was 1, which was similar to the result obtained in Comparative Example 1. In the water washing step in Example 2, the total weight of the entire dispersion in the water washing step (3) was 71.9 + 83.0 = 154.9 g. The insoluble component in the dispersion in the water washing step (3) was the water-washed water-absorbent resin (2) obtained by the water washing step and the filtration operation in Example 2, and the weight thereof was 77.4 g. Therefore, the value of the "gel concentration of the dispersion during the water washing step" in Example 2 was 77.4/154.9 ≈ 0.500. The "gel concentration of the dispersion before the neutralization step" in Example 2 was 1, which was the same as the result obtained in Example 1. From the above, the washing degree in Example 2 was (1/0.18) × (1/0.500) ≈ 1/0.09 ≈ 11.1.

Example 3

The acid treatment step and the filtration operation were carried out in the same manner as in Comparative Example 1, whereby 72.4 g of an acidic substance-treated water-absorbent resin (4) was obtained.

Subsequently, the acidic substance-treated water-absorbent resin (4) was returned to the reaction container used in the acid treatment step, and 318.0 g of tap water was newly added, to yield a dispersion (5). The dispersion (5) was stirred for 5 minutes under conditions including a stirring speed of 500 rpm and a temperature of 25°C. The total weight of the contents (dispersion (5) after stirring) was 390.4 g as described below. Subsequently, an operation of filtering the contents using a 100-mesh stainless steel wire net, and then leaving the water-absorbent resin obtained on the stainless steel wire net standing thereon for 1 minute was carried out, whereby 81.7 g of a water-absorbent resin (3) washed with water was obtained. The water washing step and the filtration operation were carried out in the manner described above.

Subsequently, the neutralization step and the drying step were carried out in the same manner as in Comparative Example 1 with the exception that the water-absorbent resin (3) washed with water was used instead of the water-absorbent resin (1) treated with the acidic substance. As a result, a recycled water-absorbent resin (3) was obtained.

The obtained recycled water-absorbent resin (3) had a water content of 2.9 wt.%, a CRC of 46.1 (g/g) and a vortex (water absorption rate) of 111 (sec).

In the acid treatment step in Example 3, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (4) obtained by the acid treatment step and the filtration operation in Example 3, and the weight thereof was 72.4 g. Therefore, the value of the "gel concentration of the dispersion during the acid treatment step" in Example 3 was 72.4/400.0 = 0.181. In Example 3, the "gel concentration of the dispersion before the water washing step" was 1, which was similar to the result obtained in Comparative Example 1. In the water washing step in Example 3, the total weight of the entire dispersion in the water washing step (3) was 72.4 + 318.0 = 390.4 g. The insoluble component in the dispersion in the water washing step (3) was the water-washed water-absorbent resin (3) obtained by the water washing step and the filtration operation in Example 3, and the weight thereof was 81.7 g. Therefore, the value of the "gel concentration of the dispersion during the water washing step" in Example 3 was 81.7/390.4 ≈ 0.209. The "gel concentration of the dispersion before the neutralization step" in Example 3 was 1, which was the same as the result obtained in Example 1. From the above, the washing degree in Example 3 was (1/0.181) × (1/0.209) ≈ 1/0.0378 ≈ 26.5.

Example 4

The acid treatment step and the filtration operation were carried out in the same manner as in Comparative Example 1, whereby 70.0 g of an acidic substance-treated water-absorbent resin (5) was obtained.

Subsequently, the acidic substance-treated water-absorbent resin (5) was returned to the reaction container used in the acid treatment step, and 714.0 g of tap water was newly added, to yield a dispersion (6). The dispersion (6) was stirred for 5 minutes under conditions including a stirring speed of 500 rpm and a temperature of 25°C. The total weight of the contents (dispersion (6) after stirring) was 784.0 g as described below. Subsequently, an operation of filtering the contents using a 100-mesh stainless steel wire net, and then leaving the water-absorbent resin obtained on the stainless steel wire net standing thereon for 1 minute was carried out, whereby 86.4 g of a water-absorbent resin (4) washed with water was obtained. The water washing step and the filtration operation were carried out in the manner described above.

Subsequently, the neutralization step and the drying step were carried out in the same manner as in Comparative Example 1 with the exception that the water-absorbent resin (4) washed with water was used instead of the water-absorbent resin (1) treated with the acidic substance. As a result, a recycled water-absorbent resin (4) was obtained.

The obtained recycled water-absorbent resin (4) had a water content of 3.4 wt.%, a CRC of 45.7 (g/g), and a vortex (water absorption rate) of 92 (sec).

In the acid treatment step in Example 4, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (5) obtained by the acid treatment step and the filtration operation in Example 4, and the weight thereof was 70.0 g. Therefore, the value of the "gel concentration of the dispersion during the acid treatment step" in Example 4 was 70.0/400.0 = 0.175. In Example 4, the "gel concentration of the dispersion before the water washing step" was 1, which was similar to the result obtained in Comparative Example 1. In the water washing step in Example 4, the total weight of the entire dispersion in the water washing step (3) was 70.0 + 714.0 = 784.0 g. The insoluble component in the dispersion in the water washing step (3) was the water-washed water-absorbent resin (4) obtained by the water washing step and the filtration operation in Example 4, and the weight thereof was 86.4 g. Therefore, the value of the "gel concentration of the dispersion during the water washing step" in Example 4 was 86.4/784.0 ≈ 0.110. The "gel concentration of the dispersion before the neutralization step" in Example 4 was 1, which was the same as the result obtained in Example 1. From the above, the washing degree in Example 4 was (1/0.175) × (1/0.110) = 1/0.01925 ≈ 51.9.

Example 5

The acid treatment step and the filtration operation were carried out in the same manner as in Comparative Example 1, with the exception that the amount of tap water used was changed to 934.7 g, whereby 72.5 g of an acidic substance-treated water-absorbent resin (6) was obtained.

Subsequently, the acidic substance-treated water-absorbent resin (6) was returned to the reaction container used in the acid treatment step, and 665.0 g of tap water was newly added, to yield a dispersion (7). The dispersion (7) was stirred for 5 minutes under conditions including a stirring speed of 500 rpm and a temperature of 25°C. The total weight of the contents (dispersion (7) after stirring) was 737.5 g as described below. Subsequently, an operation of filtering the contents using a 100-mesh stainless steel wire net, and then leaving the water-absorbent resin obtained on the stainless steel wire net standing thereon for 1 minute was carried out, whereby 103.7 g of a water-absorbent resin (5) washed with water was obtained. The water washing step and the filtration operation were carried out in the manner described above.

Subsequently, the neutralization step and the drying step were carried out in the same manner as in Comparative Example 1 with the exception that the water-absorbent resin (5) washed with water was used instead of the water-absorbent resin (1) treated with the acidic substance. As a result, a recycled water-absorbent resin (5) was obtained.

The obtained recycled water-absorbent resin (5) had a water content of 3.8 wt.%, a CRC of 47.5 (g/g), and a vortex (water absorption rate) of 88 (sec).

In the acid treatment step in Example 5, the total weight of the dispersion in the acid treatment step (2) after completion of the treatment with the acidic substance was 50.0 + 934.7 + 15.3 = 1000.0 g. The insoluble component in the dispersion in the acid treatment step (2) after completion of the treatment with the acidic substance was the acidic substance-treated water-absorbent resin (6) obtained by the acid treatment step and the filtration operation in Example 5, and the weight thereof was 72.5 g. Therefore, the value of the "gel concentration of the dispersion during the acid treatment step" in Example 5 was 72.5/1000.0 = 0.0725. In Example 5, the "gel concentration of the dispersion before the water washing step" was 1, which was similar to the result obtained in Comparative Example 1. In the water washing step in Example 5, the total weight of the entire dispersion in the water washing step (3) was 72.5 + 665.0 = 737.5 g. The insoluble component in the dispersion in the water washing step (3) was the water-washed water-absorbent resin (5) obtained by the water washing step and the filtration operation in Example 5, and the weight thereof was 103.7 g. Therefore, the value of the "gel concentration of the dispersion during the water washing step" in Example 5 was 103.7/737.5 ≈ 0.141. The "gel concentration of the dispersion before the neutralization step" in Example 5 was 1, which was the same as the result obtained in Example 1. From the above, the washing degree in Example 5 was (1/0.0725) × (1/0.141) = 1/0.01022 ≈ 98.1.

Example 6

The acid treatment step and the filtration operation were carried out in the same manner as in Comparative Example 1, with the exception that the amount of tap water used was changed to 1534.7 g, whereby 72.4 g of an acidic substance-treated water-absorbent resin (7) was obtained.

Subsequently, the acidic substance-treated water-absorbent resin (7) was returned to the reaction container used in the acid treatment step, and 1670.0 g of tap water was newly added, to yield a dispersion (8). The dispersion (8) was stirred for 5 minutes under conditions including a stirring speed of 500 rpm and a temperature of 25°C. The total weight of the contents (dispersion (8) after stirring) was 1742.4 g as described below. Subsequently, an operation of filtering the contents using a 100-mesh stainless steel wire net, and then leaving the water-absorbent resin obtained on the stainless steel wire net standing thereon for 1 minute was carried out, whereby 153.3 g of a water-absorbent resin (6) washed with water was obtained. The water washing and filtration steps were carried out in the manner described above.

Subsequently, the neutralization step and the drying step were carried out in the same manner as in Comparative Example 1 with the exception that the water-absorbent resin (6) washed with water was used instead of the water-absorbent resin (1) treated with the acidic substance. As a result, a recycled water-absorbent resin (6) was obtained.

The obtained recycled water-absorbent resin (6) had a water content of 2.6 wt.%, a CRC of 49.2 (g/g), and a vortex (water absorption rate) of 85 (sec).

In the acid treatment step in Example 6, the total weight of the dispersion in the acid treatment step (2) after completion of the treatment with the acidic substance was 50.0 + 1534.7 + 15.3 = 1600.0 g. The insoluble component in the dispersion in the acid treatment step (2) after completion of the treatment with the acidic substance was the acidic substance-treated water-absorbent resin (7) obtained by the acid treatment step and the filtration operation in Example 6, and the weight thereof was 72.4 g. Therefore, the value of the "gel concentration of the dispersion during the acid treatment step" in Example 6 was 72.4/1600.0 = 0.04525. In Example 6, the "gel concentration of the dispersion before the water washing step" was 1, which was similar to the result obtained in Comparative Example 1. In the water washing step in Example 6, the total weight of the entire dispersion in the water washing step (3) was 72.4 + 1670.0 = 1742.4 g. The insoluble component in the dispersion in the water washing step (3) was the water-washed water-absorbent resin (6) obtained by the water washing step and the filtration operation in Example 6, and the weight thereof was 153.3 g. Therefore, the value of the "gel concentration of the dispersion during the water washing step" in Example 6 was 153.3/1742.4 ≈ 0.0880. The "gel concentration of the dispersion before the neutralization step" in Example 6 was 1, which was the same as the result obtained in Example 1. From the above, the washing degree in Example 6 was (1/0.04525) × (1/0.0880) ≈ 1/0.00398 ≈ 251.2.

Example 7

The acid treatment step and the filtration operation were carried out in the same manner as in Comparative Example 1, whereby 67.8 g of an acidic substance-treated water-absorbent resin (8) was obtained.

Subsequently, the acidic substance-treated water-absorbent resin (8) was returned to the reaction container used in the acid treatment step, and 86.0 g of tap water was newly added, to yield a dispersion (9). The dispersion (9) was stirred for 5 minutes under conditions including a stirring speed of 500 rpm and a temperature of 25°C. The total weight of the contents (dispersion (9) after stirring) was 153.8 g as described below. Subsequently, an operation of filtering the contents using a 100-mesh stainless steel wire net, and then leaving the water-absorbent resin obtained on the stainless steel wire net standing thereon for 1 minute was carried out, whereby 73.5 g of a water-absorbent resin (7) washed with water was obtained. The water washing step and the filtration operation were carried out in the manner described above.

Subsequently, the neutralization step and the drying step were carried out in the same manner as in Comparative Example 1 with the exception that the water-absorbent resin (7) washed with water was used instead of the water-absorbent resin (1) treated with the acidic substance, and the drying time in the drying step was changed to 20 minutes. As a result, a recycled water-absorbent resin (7) was obtained.

The obtained recycled water-absorbent resin (7) had a water content of 12.6 wt.%, a CRC of 39.9 (g/g), and a vortex (water absorption rate) of 75 (sec).

In the acid treatment step in Example 7, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (8) obtained by the acid treatment step and the filtration operation in Example 7, and the weight thereof was 67.8 g. Therefore, the value of the "gel concentration of the dispersion during the acid treatment step" in Example 7 was 67.8/400.0 = 0.1695. In Example 7, the "gel concentration of the dispersion before the water washing step" was 1, which was similar to the result obtained in Comparative Example 1. In the water washing step in Example 7, the total weight of the entire dispersion in the water washing step (3) was 67.8 + 86.0 = 153.8 g. The insoluble component in the dispersion in the water washing step (3) was the water-washed water-absorbent resin (7) obtained by the water washing step and the filtration operation in Example 7, and the weight thereof was 73.5 g. Therefore, the value of the "gel concentration of the dispersion during the water washing step" in Example 7 was 73.5/153.8 ≈ 0.478. The "gel concentration of the dispersion before the neutralization step" in Example 7 was 1, which was the same as the result obtained in Example 1. From the above, the washing degree in Example 7 was (1/0.1695) × (1/0.478) ≈ 1/0.0810 ≈ 12.3.

Example 8

The acid treatment step and the filtration operation were carried out in the same manner as in Comparative Example 1, whereby 72.9 g of an acidic substance-treated water-absorbent resin (9) was obtained.

Subsequently, the acidic substance-treated water-absorbent resin (9) was returned to the reaction container used in the acid treatment step, and 232.0 g of tap water was newly added, to yield a dispersion (10). The dispersion (10) was stirred for 5 minutes under conditions including a stirring speed of 500 rpm and a temperature of 25°C. The total weight of the contents (dispersion (10) after stirring) was 304.9 g as described below. Subsequently, an operation of filtering the contents using a 100-mesh stainless steel wire net, and then leaving the water-absorbent resin obtained on the stainless steel wire net standing thereon for 1 minute was carried out, whereby 77.5 g of a water-absorbent resin (8) washed with water was obtained. The water washing step and the filtration operation were carried out in the manner described above.

Subsequently, the neutralization step and the drying step were carried out in the same manner as in Comparative Example 1 with the exception that the water-absorbent resin (8) washed with water was used instead of the water-absorbent resin (1) treated with the acidic substance, and the drying time in the drying step was changed to 15 minutes. As a result, a recycled water-absorbent resin (8) was obtained.

The obtained recycled water-absorbent resin (8) had a water content of 17.5 wt.%, a CRC of 38.2 (g/g), and a vortex (water absorption rate) of 53 (sec).

In the acid treatment step in Example 8, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (9) obtained by the acid treatment step and the filtration operation in Example 8, and the weight thereof was 72.9 g. Therefore, the value of the "gel concentration of the dispersion during the acid treatment step" in Example 8 was 72.9/400.0 = 0.18225. In Example 8, the "gel concentration of the dispersion before the water washing step" was 1, which was similar to the result obtained in Comparative Example 1. In the water washing step in Example 8, the total weight of the entire dispersion in the water washing step (3) was 72.9 + 232.0 = 304.9 g. The insoluble component in the dispersion in the water washing step (3) was the water-washed water-absorbent resin (8) obtained by the water washing step and the filtration operation in Example 8, and the weight thereof was 77.5 g. Therefore, the value of the "gel concentration of the dispersion during the water washing step" in Example 8 was 77.5/304.9 ≈ 0.254. In Example 8, the "gel concentration of the dispersion before the neutralization step" was 1, which was the same as the result obtained in Example 1. From the above, the washing degree in Example 8 was (1/0.18225) × (1/0.254) ≈ 1/0.0463 ≈ 21.6.

Example 9

The acid treatment step and the filtration operation were carried out in the same manner as in Comparative Example 1, whereby 72.2 g of an acidic substance-treated water-absorbent resin (10) was obtained.

Subsequently, the acidic substance-treated water-absorbent resin (10) was returned to the reaction container used in the acid treatment step, and 318.0 g of tap water was newly added, to yield a dispersion (11). The dispersion (11) was stirred for 5 minutes under conditions including a stirring speed of 500 rpm and a temperature of 25°C. The total weight of the contents (dispersion (11) after stirring) was 390.2 g as described below. Subsequently, an operation of filtering the contents using a 100-mesh stainless steel wire net, and then leaving the water-absorbent resin obtained on the stainless steel wire net standing thereon for 1 minute was carried out, whereby 81.1 g of a water-absorbent resin (9) washed with water was obtained. The water washing step and the filtration operation were carried out in the manner described above.

Subsequently, the neutralization step and the drying step were carried out in the same manner as in Comparative Example 1 with the exception that the water-absorbent resin (9) washed with water was used instead of the water-absorbent resin (1) treated with the acidic substance, and the drying time in the drying step was changed to 20 minutes. As a result, a recycled water-absorbent resin (9) was obtained.

The obtained recycled water-absorbent resin (9) had a water content of 27.3 wt.%, a CRC of 46.5 (g/g), and a vortex (water absorption rate) of 70 (sec).

In the acid treatment step in Example 9, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (10) obtained by the acid treatment step and the filtration operation in Example 9, and the weight thereof was 72.2 g. Therefore, the value of the "gel concentration of the dispersion during the acid treatment step" in Example 9 was 72.2/400.0 = 0.1805. In Example 9, the "gel concentration of the dispersion before the water washing step" was 1, which was similar to the result obtained in Comparative Example 1. In the water washing step in Example 9, the total weight of the entire dispersion in the water washing step (3) was 72.2 + 318.0 = 390.2 g. The insoluble component in the dispersion in the water washing step (3) was the water-washed water-absorbent resin (9) obtained by the water washing step and the filtration operation in Example 9, and the weight thereof was 81.1 g. Therefore, the value of the "gel concentration of the dispersion during the water washing step" in Example 9 was 81.1/390.2 ≈ 0.208. In Example 9, the "gel concentration of the dispersion before the neutralization step" was 1, which was the same as the result obtained in Example 1. From the above, the washing degree in Example 9 was (1/0.1805) × (1/0.208) = 1/0.0375 ≈ 26.7.

Example 10

The acid treatment step and the filtration operation were carried out in the same manner as in Comparative Example 1, whereby 69.7 g of an acidic substance-treated water-absorbent resin (11) was obtained.

Subsequently, the acidic substance-treated water-absorbent resin (11) was returned to the reaction container used in the acid treatment step, and 323.0 g of tap water was newly added, to yield a dispersion (12). The dispersion (12) was stirred for 5 minutes under conditions including a stirring speed of 500 rpm and a temperature of 25°C. The total weight of the contents (dispersion (12) after stirring) was 392.7 g as described below. Subsequently, an operation of filtering the contents using a 100-mesh stainless steel wire net, and then leaving the water-absorbent resin obtained on the stainless steel wire net standing thereon for 1 minute was carried out, whereby 76.7 g of a water-absorbent resin (10) washed with water was obtained. The water washing step and the filtration operation were carried out in the manner described above.

Subsequently, the neutralization step and the drying step were carried out in the same manner as in Comparative Example 1 with the exception that the water-absorbent resin (10) washed with water was used instead of the water-absorbent resin (1) treated with the acidic substance, and the drying time in the drying step was changed to 15 minutes. As a result, a recycled water-absorbent resin (10) was obtained.

The obtained recycled water-absorbent resin (10) had a water content of 13.7 wt.%, a CRC of 40.2 (g/g), and a vortex (water absorption rate) of 59 (sec).

In the acid treatment step in Example 10, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (11) obtained by the acid treatment step and the filtration operation in Example 10, and the weight thereof was 69.7 g. Therefore, the value of the "gel concentration of the dispersion during the acid treatment step" in Example 10 was 69.7/400.0 = 0.17425. In Example 10, the "gel concentration of the dispersion before the water washing step" was 1, which was similar to the result obtained in Comparative Example 1. In the water washing step in Example 10, the total weight of the entire dispersion in the water washing step (3) was 69.7 + 323.0 = 392.7 g. The insoluble component in the dispersion in the water washing step (3) was the water-washed water-absorbent resin (10) obtained by the water washing step and the filtration operation in Example 10, and the weight thereof was 76.7 g. Therefore, the value of the "gel concentration of the dispersion during the water washing step" in Example 10 was 76.7/392.7 ≈ 0.195. In Example 10, the "gel concentration of the dispersion before the neutralization step" was 1, which was the same as the result obtained in Example 1. From the above, the washing degree in Example 10 was (1/0.17425) × (1/0.195) ≈ 1/0.0340 ≈ 29.4.

Example 11

The acid treatment step and the filtration operation were carried out in the same manner as in Comparative Example 1, whereby 70.5 g of an acidic substance-treated water-absorbent resin (12) was obtained.

Subsequently, the acidic substance-treated water-absorbent resin (12) was returned to the reaction container used in the acid treatment step, and 717.0 g of tap water was newly added, to yield a dispersion (13). The dispersion (13) was stirred for 5 minutes under conditions including a stirring speed of 500 rpm and a temperature of 25°C. The total weight of the contents (dispersion (13) after stirring) was 787.5 g as described below. Subsequently, an operation of filtering the contents using a 100-mesh stainless steel wire net, and then leaving the water-absorbent resin obtained on the stainless steel wire net standing thereon for 1 minute was carried out, whereby 84.1 g of a water-absorbent resin (11) washed with water was obtained. The water washing step and the filtration operation were carried out in the manner described above.

Subsequently, the neutralization step and the drying step were carried out in the same manner as in Comparative Example 1 with the exception that the water-absorbent resin (11) washed with water was used instead of the water-absorbent resin (1) treated with the acidic substance, and the drying time in the drying step was changed to 20 minutes. As a result, a recycled water-absorbent resin (11) was obtained.

The obtained recycled water-absorbent resin (11) had a water content of 6.1 wt.%, a CRC of 45.4 (g/g), and a vortex (water absorption rate) of 80 (sec).

In the acid treatment step in Example 11, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (12) obtained by the acid treatment step and the filtration operation in Example 11, and the weight thereof was 70.5 g. Therefore, the value of the "gel concentration of the dispersion during the acid treatment step" in Example 11 was 70.5/400.0 = 0.17625. In Example 11, the "gel concentration of the dispersion before the water washing step" was 1, which was similar to the result obtained in Comparative Example 1. In the water washing step in Example 11, the total weight of the entire dispersion in the water washing step (3) was 70.5 + 717.0 = 787.5 g. The insoluble component in the dispersion in the water washing step (3) was the water-washed water-absorbent resin (11) obtained by the water washing step and the filtration operation in Example 11, and the weight thereof was 84.1 g. Therefore, the value of the "gel concentration of the dispersion during the water washing step" in Example 11 was 84.1/787.5 ≈ 0.107. The "gel concentration of the dispersion before the neutralization step" in Example 11 was 1, which was the same as the result obtained in Example 1. From the above, the washing degree in Example 11 was (1/0.17625) × (1/0.107) ≈ 1/0.0189 ≈ 53.1.

Example 12

The acid treatment step and the filtration operation were carried out in the same manner as in Comparative Example 1, whereby 73.0 g of an acidic substance-treated water-absorbent resin (13) was obtained.

Subsequently, the acidic substance-treated water-absorbent resin (13) was returned to the reaction container used in the acid treatment step, and 1117.0 g of tap water was newly added, to yield a dispersion (14). The dispersion (14) was stirred for 5 minutes under conditions including a stirring speed of 500 rpm and a temperature of 25°C. The total weight of the contents (dispersion (14) after stirring) was 1190.0 g as described below. Subsequently, an operation of filtering the contents using a 100-mesh stainless steel wire net, and then leaving the water-absorbent resin obtained on the stainless steel wire net standing thereon for 1 minute was carried out, whereby 84.0 g of a water-absorbent resin (12) washed with water was obtained. The water washing step and the filtration operation were carried out in the manner described above.

Subsequently, the neutralization step and the drying step were carried out in the same manner as in Comparative Example 1 with the exception that the water-absorbent resin (12) washed with water was used instead of the water-absorbent resin (1) treated with the acidic substance, and the drying time in the drying step was changed to 15 minutes. As a result, a recycled water-absorbent resin (12) was obtained.

The obtained recycled water-absorbent resin (12) had a water content of 17.9 wt.%, a CRC of 39.3 (g/g), and a vortex (water absorption rate) of 51 (sec).

In the acid treatment step in Example 12, the total weight of the dispersion in the acid treatment step (2) after completion of the treatment with the acidic substance was 400.0 g, which was similar to the result obtained in Comparative Example 1. The insoluble component in the dispersion in the acid treatment step (2) after completion of the treatment with the acidic substance was the acidic substance-treated water-absorbent resin (13) obtained by the acid treatment step and the filtration operation in Example 12, and the weight thereof was 73.0 g. Therefore, the value of the "gel concentration of the dispersion during the acid treatment step" in Example 11 was 73.0/400.0 = 0.1825. In Example 12, the "gel concentration of the dispersion before the water washing step" was 1, which was similar to the result obtained in Comparative Example 1. In addition, in the water washing step in Example 12, the total weight of the entire dispersion in the water washing step (3) was 73.0 + 1117.0 = 1190.0 g. The insoluble component in the dispersion in the water washing step (3) was the water-washed water-absorbent resin (12) obtained by the water washing step and the filtration operation in Example 12, and the weight thereof was 84.0 g. Therefore, the value of the "gel concentration of the dispersion during the water washing step" in Example 12 was 84.0/1190.0 ≈ 0.0706. In Example 12, the "gel concentration of the dispersion before the neutralization step" was 1, which was the same as the result obtained in Example 1. From the above, the washing degree in Example 12 was (1/0.1825) × (1/0.0706) ≈ 1/0.0129 ≈ 77.6.

Example 13

The acid treatment step and the filtration operation were carried out in the same manner as in Comparative Example 1 with the exception that the amount of tap water used was changed to 934.7 g, whereby 73.0 g of an acidic substance-treated water-absorbent resin (14) was obtained.

Subsequently, the acidic substance-treated water-absorbent resin (14) was returned to the reaction container used in the acid treatment step, and 520.0 g of tap water was newly added, to yield a dispersion (15). The dispersion (15) was stirred for 5 minutes under conditions including a stirring speed of 500 rpm and a temperature of 25°C. The total weight of the contents (dispersion (15) after stirring) was 593.0 g as described below. Subsequently, an operation of filtering the contents using a 100-mesh stainless steel wire net, and then leaving the water-absorbent resin obtained on the stainless steel wire net standing thereon for 1 minute was carried out, whereby 79.7 g of a water-absorbent resin (13) washed with water was obtained. The water washing step and the filtration operation were carried out in the manner described above.

Subsequently, the neutralization step and the drying step were carried out in the same manner as in Comparative Example 1 with the exception that the water-absorbent resin (13) washed with water was used instead of the water-absorbent resin (1) treated with the acidic substance, and the drying time in the drying step was changed to 15 minutes. As a result, a recycled water-absorbent resin (13) was obtained.

The obtained recycled water-absorbent resin (13) had a water content of 18.5 wt.%, a CRC of 39.6 (g/g), and a vortex (water absorption rate) of 50 (sec).

In the acid treatment step in Example 13, the total weight of the dispersion in the acid treatment step (2) after completion of the treatment with the acidic substance was 50.0 + 934.7 + 15.3 = 1000.0 g. The insoluble component in the dispersion in the acid treatment step (2) after completion of the treatment with the acidic substance was the acidic substance-treated water-absorbent resin (14) obtained by the acid treatment step and the filtration operation in Example 13, and the weight thereof was 73.0 g. Therefore, the value of the "gel concentration of the dispersion during the acid treatment step" in Example 11 was 73.0/1000.0 = 0.073. In Example 13, the "gel concentration of the dispersion before the water washing step" was 1, which was similar to the result obtained in Comparative Example 1. In the water washing step in Example 13, the total weight of the entire dispersion in the water washing step (3) was 73.0 + 520.0 = 593.0 g. The insoluble component in the dispersion in the water washing step (3) was the water-washed water-absorbent resin (13) obtained by the water washing step and the filtration operation in Example 13, and the weight thereof was 79.7 g. Therefore, the value of the "gel concentration of the dispersion during the water washing step" in Example 13 was 79.7/593.0 ≈ 0.134. In Example 12, the "gel concentration of the dispersion before the neutralization step" was 1, which was the same as the result obtained in Example 1. From the above, the washing degree in Example 12 was (1/0.073) × (1/0.134) ≈ 1/0.00978 ≈ 102.2.

Results A

The production conditions for Comparative Example 1 and Examples 1 to 13 are shown in Table 1 below. In addition, the results of the evaluations of the water content, the CRC, the vortex (water absorption rate), and the Ca content, which are properties of the obtained recycled water-absorbent resin (1) for comparison and the recycled water-absorbent resins (1) to (13), are also shown in Table 1 below.

[Table 1]

| | | Comparative Example 1 | Example 1 | Example 2 | Example 3 | Example 4 | Example 5 | Example 6 |
|---|---|---|---|---|---|---|---|---|
| Gel concentration of dispersion during acid treatment step [g/g] | | 0.184 | 0.180 | 0.180 | 0.181 | 0.175 | 0.0725 | 0.04525 |
| Gel concentration of dispersion during water washing step [g/g] | | 1 | 0.679 | 0.500 | 0.209 | 0.110 | 0.141 | 0.0880 |
| Washing degree | | 5.4 | 8.2 | 11.1 | 26.5 | 51.9 | 98.1 | 251.2 |
| Properties of recycled water-absorbent resin | Water content [wt.%] | 3.0 | 3.0 | 3.7 | 2.9 | 3.4 | 3.8 | 2.6 |
| | CRC [g/g] | 31.2 | 34.5 | 42.1 | 46.1 | 45.7 | 47.5 | 49.2 |
| | vortex [sec] | 300 or more | 300 or more | 146 | 111 | 92 | 88 | 85 |
| | Ca content [wt.%] | 1.20 | 0.91 | 0.68 | 0.30 | 0.22 | 0.20 | 0.14 |
| | | Example 7 | Example 8 | Example 9 | Example 10 | Example 11 | Example 12 | Example 13 |
| Gel concentration of dispersion during acid treatment step [g/g] | | 0.1695 | 0.18225 | 0.1805 | 0.17425 | 0.17625 | 0.1825 | 0.073 |
| Gel concentration of dispersion during water washing step [g/g] | | 0.478 | 0.254 | 0.208 | 0.195 | 0.107 | 0.0706 | 0.134 |
| Washing degree | | 12.3 | 21.6 | 26.7 | 29.4 | 53.1 | 77.6 | 102.2 |
| Properties of recycled water-absorbent resin | Water content [wt.%] | 12.6 | 17.5 | 27.3 | 13.7 | 6.1 | 17.9 | 18.5 |
| | CRC [g/g] | 39.9 | 38.2 | 46.5 | 40.2 | 45.4 | 39.3 | 39.6 |
| | vortex [sec] | 75 | 53 | 70 | 59 | 80 | 51 | 50 |

While the method for producing the recycled water-absorbent resin in Comparative Example 1 does not include the water washing step, the method for producing the recycled water-absorbent resin in Examples 1 to 13 includes the water washing step and corresponds to the method for producing a recycled water-absorbent resin according to an embodiment of the present invention. As shown in Table 1, the recycled water-absorbent resins (1) to (13) produced in Examples 1 to 13 had a lower Ca content and a higher CRC value, which indicates water absorption performance, than the recycled water-absorbent resin (1) for comparison, which was produced in Comparative Example 1.

From the above, it was found that the method for producing a recycled water-absorbent resin according to an embodiment of the present invention can produce a recycled water-absorbent resin in which the residual amount of polyvalent metal ions such as $Ca^{2+}$ is reduced and which is excellent in water absorption performance such as CRC. That is, it was found that by including the water washing step, the method for producing a recycled water-absorbent resin according to an embodiment of the present invention exhibits an effect that a recycled water-absorbent resin having water absorption performance that more closely approaches that of the water-absorbent resin before use can be obtained from the water-absorbent resin after use.

As shown in Table 1, while the washing degree in Example 1 was less than 10, the washing degree in Examples 2 to 13 was 10 or more. Moreover, as shown in Table 1, the recycled water-absorbent resins (2) to (13) produced in Examples 2 to 13 exhibited a significantly improved vortex (water absorption rate) as compared with the recycled water-absorbent resin (1) produced in Example 1.

In addition, the recycled water-absorbent resins produced in Examples 7 to 13, in which the washing degree was 10 or more and the water content was from 5 to 30 wt.%, were excellent particularly in the vortex (water absorption rate).

From the above, it was found that in the method for producing a recycled water-absorbent resin according to an embodiment of the present invention, the water absorption performance, and particularly the water absorption rate, can be further improved by carrying out the acid treatment step, the water washing step, and the neutralization step so that the washing degree is 10 or more.

Production of Recycled Water-Absorbent Resin

Example 14

50.0 g of the water-absorbent resin (1) treated with the polyvalent metal salt and obtained in Production Example 1 and 300.0 g of deionized water were added to a reaction container equipped with a pH meter (LAQUA D-71 available from Horiba, Ltd.), whereby a dispersion (16) was obtained. The content of the water-absorbent resin in the dispersion (16) was 2.1 wt.%: [{50 $\times$ (1 - 0.855)} g/350.0 g $\times$ 100].

6M aqueous hydrochloric acid solution was gradually added to the dispersion (16) with stirring under conditions including a stirring speed of 500 rpm and a temperature of the dispersion (16) of 25°C, and addition of the 6M aqueous hydrochloric acid solution was stopped when the pH meter showed a numeric value of 1.43. The addition amount of the 6M aqueous hydrochloric acid solution was 13.3 g.

Subsequently, stirring was continued for 15 minutes under the same conditions as described above. During stirring, the numeric value reading of the pH meter was within a range of 1.45 $\pm$ 0.05. Subsequently, the contents (the dispersion (16) after the addition of the 6M aqueous hydrochloric acid solution) were filtered using a 100-mesh stainless steel wire net, and a residue (the water-absorbent resin (15) treated with the acidic substance) on the wire net was obtained (filtration operation). The acid treatment step and the filtration operation were carried out by the methods described above.

Subsequently, the water-absorbent resin (15) treated with the acidic substance was returned to the reaction container, and 237 g of deionized water was newly added thereto, whereby a dispersion (17) was obtained. The dispersion (17) was stirred for 5 minutes under conditions including a stirring speed of 500 rpm and a temperature of 25°C. Subsequently, the contents (the dispersion (17) after stirring) were filtered using a 100-mesh stainless steel wire net, and a residue (the water-absorbent resin (14) washed with water) on the wire net was obtained (filtration operation). The water washing step and the filtration operation were carried out in the manner described above.

Subsequently, the water-absorbent resin (14) washed with water was placed into a separate container, and while the water-absorbent resin (14) washed with water was stirred with a spatula, 2.95 g of sodium carbonate powder was gradually added thereto at a temperature of 25°C, and then stirring was further continued for 2 minutes. After completion of addition of the sodium carbonate powder, the mixture was allowed to stand for 20 minutes. As a result, a water-absorbent resin (2) neutralized with an alkali metal salt was obtained. The time (treatment time for neutralization) from the time at which the addition of the sodium carbonate powder was started until prior to the completion of the mixture being left standing was approximately 23 minutes.

Next, the obtained water-absorbent resin (2) neutralized with the alkali metal salt was spread on the bottom surface of a stainless steel tray, and the stainless steel tray was placed in a hot-air circulating oven in which the temperature of hot air was set to 180°C. Subsequently, the water-absorbent resin (2) neutralized with the alkali metal salt was dried for 60 minutes in the hot-air circulating oven. As a result, a recycled water-absorbent resin (14) was obtained. The recycled water-absorbent resin (14) had a CRC of 48.1 (g/g).

Example 15

A recycled water-absorbent resin (15) was obtained in the same manner as in Example 14 with the exception that the addition of 6M aqueous hydrochloric acid solution to the dispersion (16) was continued until the numeric value reading of the pH meter was 2.14, and the pH range during stirring was 2.15 $\pm$ 0.05. The addition amount of the 6M aqueous hydrochloric acid solution in Example 15 was 10.6 g. The recycled water-absorbent resin (15) had a CRC of 47.6 (g/g).

Example 16

A recycled water-absorbent resin (16) was obtained in the same manner as in Example 14 with the exception that the addition of 6M aqueous hydrochloric acid solution to the dispersion (16) was continued until the numeric value reading of the pH meter was 2.38, and the pH range during stirring was 2.40 ± 0.05. The addition amount of the 6M aqueous hydrochloric acid solution in Example 16 was 10.0 g. The recycled water-absorbent resin (16) had a CRC of 47.5 (g/g).

Example 17

A recycled water-absorbent resin (17) was obtained in the same manner as in Example 14 with the exception that the addition of 6M aqueous hydrochloric acid solution to the dispersion (16) was continued until the numeric value reading of the pH meter was 0.53, and the pH range during stirring was 0.55 ± 0.05. The addition amount of the 6M aqueous hydrochloric acid solution in Example 14 was 39.8 g. The recycled water-absorbent resin (17) had a CRC of 44.3 (g/g).

Example 18

A recycled water-absorbent resin (18) was obtained in the same manner as in Example 14 with the exception that the addition of 6M aqueous hydrochloric acid solution to the dispersion (16) was continued until the numeric value reading of the pH meter was 2.86, and the pH range during stirring was 2.85 ± 0.05. The addition amount of the 6M aqueous hydrochloric acid solution in Example 18 was 9.3 g. The recycled water-absorbent resin (18) had a CRC of 39.7 (g/g).

Referential Example 1

A recycled water-absorbent resin (1) for reference was obtained in the same manner as in Example 14 with the exception that the addition of 6M aqueous hydrochloric acid solution to the dispersion (16) was continued until the numeric value reading of the pH meter was 3.25, and the pH range during stirring was 3.25 ± 0.05. The addition amount of the 6M aqueous hydrochloric acid solution in Referential Example 1 was 8.0 g. The recycled water-absorbent resin (1) for reference had a CRC of 18.4 (g/g).

Referential Example 2

A recycled water-absorbent resin (2) for reference was obtained in the same manner as in Example 14 with the exception that the addition of 6M aqueous hydrochloric acid solution to the dispersion (16) was continued until the numeric value reading of the pH meter was 3.52, and the pH range during stirring was 3.50 ± 0.05. The addition amount of the 6M aqueous hydrochloric acid solution in Referential Example 2 was 6.6 g. The recycled water-absorbent resin (2) for reference had a CRC of 6.9 (g/g).

Comparative Example 2

In the same manner as in Example 14 with the exception that the addition of 6M aqueous hydrochloric acid solution to the dispersion (16) was continued until the numeric value reading of the pH meter was 1.44, and the pH range during stirring was 1.45 ± 0.05, the dehydration step and the acid treatment step were carried out, and filtering (filtration operation) was implemented using a 100-mesh stainless steel wire net, to yield an acidic substance-treated water-absorbent resin for comparison. The addition amount of the 6M aqueous hydrochloric acid solution in Comparative Example 2 was 13.1 g.

20.0 g of the obtained acidic substance-treated water-absorbent resin for comparison was placed into a beaker, 80.0 g of deionized water was added thereto, and the mixture was stirred at room temperature (25°C) for 15 minutes, to yield an extraction liquid (1) for electrical conductivity measurement. The electrical conductivity of the extraction liquid (1) for electrical conductivity measurement was measured with an ES-51 electrical conductivity meter available from Horiba, Ltd., and the value thereof was 10.2 mS/cm. This electrical conductivity was defined as the electrical conductivity E0 of the extraction liquid of the acidic substance-treated water-absorbent resin for comparison.

Without being subjected to a water washing step, 40.0 g of the obtained acidic substance-treated water-absorbent resin for comparison, which had been filtered, was placed into a separate container. While the acidic substance-treated water-absorbent resin for comparison was stirred with a spatula, 1.70 g of sodium carbonate powder was gradually added thereto at a temperature of 25°C, and then stirring was further continued for 2 minutes. After completion of addition of the sodium carbonate powder, the mixture was allowed to stand for 20 minutes. As a result, a water-absorbent resin for comparison neutralized with an alkali metal salt was obtained. That is, the water-absorbent resin for comparison neutralized with the alkali metal salt was a water-absorbent resin for comparison obtained without subjecting the water-absorbent resin treated with the acidic substance to the water washing step. The time (treatment time for neutralization) from the time at which the addition of the sodium carbonate powder was started until prior to the completion of the mixture being left standing was approximately 23 minutes.

Next, the obtained water-absorbent resin for comparison neutralized with the alkali metal salt was dried in the same manner as in the drying step in Example 1. As a result, a recycled water-absorbent resin (2) for comparison was obtained. The recycled water-absorbent resin (2) for comparison had a CRC of 46.1 (g/g) and a vortex (water absorption rate) of 163 (sec).

Example 19

In the same manner as in Example 14 with the exception that the addition of 6M aqueous hydrochloric acid solution to the dispersion (16) was continued until the numeric value reading of the pH meter was 1.38, and the pH range during stirring was 1.40 ± 0.05, the dehydration step and the acid treatment step were carried out, to yield an acidic substance-treated water-absorbent resin (16). The addition amount of the 6M aqueous hydrochloric acid solution in Example 19 was 13.3 g.

The extraction liquid electrical conductivity E0 of the acidic substance-treated water-absorbent resin (16) was measured by the same method as in Comparative Example 2, and the value thereof was 10.2 mS/cm. This electrical conductivity was defined as the extraction liquid electrical conductivity E0 of the water-absorbent resin (16) treated with the acidic substance.

Next, the water-absorbent resin (16) treated with the acidic substance was subjected to the water washing step and the filtration operation in the same manner as in Example 14 with the exception that the amount of deionized water used was changed to 21.5 g, whereby a water-absorbent resin (15) washed with water was obtained.

Next, 20.0 g of the obtained water-absorbent resin (15) washed with water was placed into a beaker, 80.0 g of deionized water was added thereto, and the mixture was stirred for 15 minutes, to yield an extraction liquid (2) for electrical conductivity measurement. The electrical conductivity of the extraction liquid (2) for electrical conductivity measurement was measured by the same method as in Comparative Example 2, and the value thereof was 6.7 mS/cm. This electrical conductivity was defined as the extraction liquid electrical conductivity E1 of the water-absorbent resin (15) washed with water.

Thus, the ratio (E1/E0) of the extraction liquid electrical conductivity E1 of the water-absorbent resin (15) washed with water to the extraction liquid electrical conductivity E0 of the water-absorbent resin (16) treated with the acidic substance (extraction liquid electrical conductivity of the acidic substance-treated water-absorbent resin for comparison) was 6.7/10.2 ≈ 0.66.

40.0 g of the obtained water-absorbent resin (15) washed with water was placed into a separate container, and while the water-absorbent resin (15) washed with water was stirred with a spatula, 1.70 g of sodium carbonate powder was gradually added thereto at a temperature of 25°C. After completion of addition of the sodium carbonate powder, the mixture was allowed to stand for 20 minutes. As a result, a water-absorbent resin (3) neutralized with an alkali metal salt was obtained. The time (treatment time for neutralization) from the time at which the addition of the sodium carbonate powder was started until prior to the completion of the mixture being left standing was approximately 23 minutes.

Subsequently, the obtained water-absorbent resin (3) neutralized with the alkali metal salt was dried in the same manner as in the drying step in Example 14. As a result, a recycled water-absorbent resin (19) was obtained. The recycled water-absorbent resin (19) had a CRC of 46.2 (g/g) and a vortex (water absorption rate) of 124 (sec).

Example 20

An acidic substance-treated water-absorbent resin (17) was obtained by carrying out the dehydration step and the acid treatment step in the same manner as in Example 14 with the exception that the addition of 6M aqueous hydrochloric acid solution to the dispersion (16) was continued until the numeric value reading of the pH meter was 1.40, and the pH range during stirring was 1.40 ± 0.05. The addition amount of the 6M aqueous hydrochloric acid solution in Example 20 was 13.3 g.

The extraction liquid E0 of the acidic substance-treated water-absorbent resin (17) was measured by the same method as in Comparative Example 2, and the value thereof was 10.2 mS/cm. This electrical conductivity was defined as the extraction liquid electrical conductivity E0 of the water-absorbent resin (17) treated with the acidic substance.

The obtained acidic substance-treated water-absorbent resin (17) was subjected to the water washing step in the same manner as in Example 14 with the exception that the amount of deionized water used was changed to 70.0 g, whereby a water-absorbent resin (16) washed with water was obtained.

Next, an extraction liquid (3) for electrical conductivity measurement was obtained in the same manner as in Example 19 using 20.0 g of the obtained water-absorbent resin (16) washed with water. The electrical conductivity of the extraction liquid (3) for electrical conductivity measurement was measured by the same method as in Comparative Example 2, and the value thereof was 3.5 mS/cm. This electrical conductivity was defined as the extraction liquid electrical conductivity E1 of the water-absorbent resin (16) washed with water.

Thus, the ratio (E1/E0) of the extraction liquid electrical conductivity E1 of the water-absorbent resin (16) washed with water to the extraction liquid electrical conductivity E0 of the water-absorbent resin (17) treated with the acidic substance (extraction liquid electrical conductivity of the acidic substance-treated water-absorbent resin for comparison) was 3.5/10.2 ≈ 0.34.

Furthermore, a recycled water-absorbent resin (20) was obtained in the same manner as in Example 19 using 40.0 g of the obtained water-absorbent resin (16) washed with water. The recycled water-absorbent resin (20) had a CRC of 47.2 (g/g) and a vortex (water absorption rate) of 71 (sec).

Example 21

An acidic substance-treated water-absorbent resin (18) was obtained by carrying out the dehydration step and the acid treatment step in the same manner as in Example 14 with the exception that the addition of 6M aqueous hydrochloric acid solution to the dispersion (16) was continued until the numeric value reading of the pH meter was 1.41, and the pH range during stirring was 1.40 ± 0.05. The addition amount of the 6M aqueous hydrochloric acid solution in Example 21 was 13.1 g.

The extraction liquid E0 of the acidic substance-treated water-absorbent resin (18) was measured by the same method as in Comparative Example 2, and the value thereof was 10.2 mS/cm. This electrical conductivity was defined as the extraction liquid electrical conductivity E0 of the water-absorbent resin (18) treated with the acidic substance.

The obtained acidic substance-treated water-absorbent resin (18) was subjected to the water washing step in the same manner as in Example 14 with the exception that the amount of deionized water used was changed to 120.0 g, whereby a water-absorbent resin (17) washed with water was obtained.

Next, an extraction liquid (4) for electrical conductivity measurement was obtained in the same manner as in Example 19 using 20.0 g of the obtained water-absorbent resin (17) washed with water. The electrical conductivity of the extraction liquid (4) for electrical conductivity measurement was measured by the same method as in Comparative Example 2, and the value thereof was 2.9 mS/cm. This electrical conductivity was defined as the extraction liquid electrical conductivity E1 of the water-absorbent resin (17) washed with water.

Thus, the ratio (E1/E0) of the extraction liquid electrical conductivity E1 of the water-absorbent resin (17) washed with water to the extraction liquid electrical conductivity E0 of the water-absorbent resin (18) treated with the acidic substance (extraction liquid electrical conductivity of the acidic substance-treated water-absorbent resin for comparison) was 2.9/10.2 = 0.28.

Furthermore, a recycled water-absorbent resin (21) was obtained in the same manner as in Example 18 using 40.0 g of the obtained water-absorbent resin (17) washed with water. The recycled water-absorbent resin (21) had a CRC of 47.1 (g/g) and a vortex (water absorption rate) of 59 (sec).

Example 22

An acidic substance-treated water-absorbent resin (19) was obtained by carrying out the dehydration step and the acid treatment step in the same manner as in Example 14 with the exception that the addition of 6M aqueous hydrochloric acid solution to the dispersion (16) was continued until the numeric value reading of the pH meter was 1.44, and the pH range during stirring was 1.45 ± 0.05. The addition amount of the 6M aqueous hydrochloric acid solution in Example 22 was 13.0 g.

The extraction liquid E0 of the acidic substance-treated water-absorbent resin (19) was measured by the same method as in Comparative Example 2, and the value thereof was 10.2 mS/cm. This electrical conductivity was defined as the extraction liquid electrical conductivity E0 of the water-absorbent resin (19) treated with the acidic substance.

The obtained acidic substance-treated water-absorbent resin (19) was subjected to the water washing step in the same manner as in Example 14 with the exception that the amount of deionized water used was changed to 260.0 g, whereby a water-absorbent resin (18) washed with water was obtained.

Next, an extraction liquid (5) for electrical conductivity measurement was obtained in the same manner as in Example 18 using 20.0 g of the obtained water-absorbent resin (18) washed with water. The electrical conductivity of the extraction liquid (5) for electrical conductivity measurement was measured by the same method as in Comparative Example 2, and the value thereof was 2.3 mS/cm. This electrical conductivity was defined as the extraction liquid electrical conductivity E1 of the water-absorbent resin (18) washed with water.

Thus, the ratio (E1/E0) of the extraction liquid electrical conductivity E1 of the water-absorbent resin (18) washed with water to the extraction liquid electrical conductivity E0 of the water-absorbent resin (19) treated with the acidic substance (extraction liquid electrical conductivity of the acidic substance-treated water-absorbent resin for comparison) was 2.3/10.2 = 0.23.

Furthermore, a recycled water-absorbent resin (22) was obtained in the same manner as in Example 18 using 40.0 g of the obtained water-absorbent resin (18) washed with water. The recycled water-absorbent resin (22) had a CRC of 47.5 (g/g) and a vortex (water absorption rate) of 52 (sec).

Example 23

An acidic substance-treated water-absorbent resin (20) was obtained by carrying out the dehydration step and the acid treatment step in the same manner as in Example 14 with the exception that the addition of 6M aqueous hydrochloric acid solution to the dispersion (16) was continued until the numeric value reading of the pH meter was 1.42, and the pH range during stirring was 1.40 ± 0.05. The addition amount of the 6M aqueous hydrochloric acid solution in Example 23 was 12.8 g.

The extraction liquid E0 of the acidic substance-treated water-absorbent resin (20) was measured by the same method as in Comparative Example 2, and the value thereof was 10.2 mS/cm. This electrical conductivity was defined as the extraction liquid electrical conductivity E0 of the water-absorbent resin (20) treated with the acidic substance.

The obtained acidic substance-treated water-absorbent resin (20) was subjected to the water washing step in the same manner as in Example 14 with the exception that the amount of deionized water used was changed to 550.0 g, whereby a water-absorbent resin (19) washed with water was obtained.

Next, an extraction liquid (6) for electrical conductivity measurement was obtained in the same manner as in Example 18 using 20.0 g of the obtained water-absorbent resin (19) washed with water. The electrical conductivity of the extraction liquid (6) for electrical conductivity measurement was measured by the same method as in Comparative Example 2, and the value thereof was 1.9 mS/cm. This electrical conductivity was defined as the extraction liquid electrical conductivity E1 of the water-absorbent resin (19) washed with water.

Thus, the ratio (E1/E0) of the extraction liquid electrical conductivity E1 of the water-absorbent resin (19) washed with water to the extraction liquid electrical conductivity E0 of the water-absorbent resin (20) treated with the acidic substance (extraction liquid electrical conductivity of the acidic substance-treated water-absorbent resin for comparison) was 1.9/10.2 ≈ 0.19.

Furthermore, a recycled water-absorbent resin (23) was obtained in the same manner as in Example 19 using 40.0 g of the obtained water-absorbent resin (19) washed with water. The recycled water-absorbent resin (23) had a CRC of 47.6 (g/g) and a vortex (water absorption rate) of 50 (sec).

Example 24

An acidic substance-treated water-absorbent resin (21) was obtained by carrying out the dehydration step and the acid treatment step in the same manner as in Example 14 with the exception that the addition of 6M aqueous hydrochloric acid solution to the dispersion (16) was continued until the numeric value reading of the pH meter was 1.39, and the pH range during stirring was 1.40 ± 0.05. The addition amount of the 6M aqueous hydrochloric acid solution in Example 24 was 12.8 g.

The extraction liquid E0 of the acidic substance-treated water-absorbent resin (21) was measured by the same method as in Comparative Example 2, and the value thereof was 10.2 mS/cm. This electrical conductivity was defined as the extraction liquid electrical conductivity E0 of the water-absorbent resin (21) treated with the acidic substance.

The obtained acidic substance-treated water-absorbent resin (21) was subjected to the water washing step in the same manner as in Example 14 with the exception that the amount of deionized water used was changed to 1150 g, whereby a water-absorbent resin (20) washed with water was obtained.

Next, an extraction liquid (7) for electrical conductivity measurement was obtained in the same manner as in Example 19 using 20.0 g of the obtained water-absorbent resin (20) washed with water. The electrical conductivity of the extraction liquid (7) for electrical conductivity measurement was measured by the same method as in Comparative Example 2, and the value thereof was 1.5 mS/cm. This electrical conductivity was defined as the extraction liquid electrical conductivity E1 of the water-absorbent resin (20) washed with water.

Thus, the ratio (E1/E0) of the extraction liquid electrical conductivity E1 of the water-absorbent resin (20) washed with water to the extraction liquid electrical conductivity E0 of the water-absorbent resin (21) treated with the acidic substance (extraction liquid electrical conductivity of the acidic substance-treated water-absorbent resin for comparison) was 1.5/10.2 ≈ 0.15.

Furthermore, a recycled water-absorbent resin (24) was obtained in the same manner as in Example 18 using 40.0 g of the obtained water-absorbent resin (20) washed with water. The recycled water-absorbent resin (24) had a CRC of 47.3 (g/g) and a vortex (water absorption rate) of 50 (sec).

Results B

The production conditions for Examples 14 to 18 and Referential Examples 1 and 2 are shown in Table 2 below. The results of evaluating the CRC, which is the water absorption performance, of the obtained recycled water-absorbent resins (14) to (18) and the recycled water-absorbent resins (1) and (2) for reference are also shown in Table 2 below.

[Table 2]

| | | Example 14 | Example 15 | Example 16 | Example 17 | Example 18 | Referential Example 1 | Referential Example 2 |
|---|---|---|---|---|---|---|---|---|
| Production conditions in acid treatment step | pH of dispersion at end of addition of aqueous hydrochloric acid solution | 1.43 | 2.14 | 2.38 | 0.53 | 2.86 | 3.25 | 3.52 |
| | Addition amount of 6M aqueous hydrochloric acid solution [g] | 13.3 | 10.6 | 10.0 | 39.8 | 9.3 | 8.0 | 6.6 |
| Evaluation results of recycled water-absorbent resin | CRC [g/g] | 48.1 | 47.6 | 47.5 | 44.3 | 39.7 | 18.4 | 6.9 |

As shown in Table 2, in Examples 14 to 18, the pH of the dispersion at the end of addition of the aqueous hydrochloric acid solution and during the acid treatment step was in a range from -1.0 to 3.0. In other words, the production methods in Examples 14 to 18 had a feature (hereinafter referred to as "feature A") of adding, in the acid treatment step, an acidic substance to the dispersion of the water-absorbent resin treated with a polyvalent metal salt so that the pH of the dispersion is adjusted to be from -1.0 to 3.0. On the other hand, the production methods in Referential Examples 1 and 2 did not have the feature A. The production methods in Examples 14 to 18 and Referential Examples 1 and 2 correspond to the method for producing a recycled water-absorbent resin according to an embodiment of the present invention. In addition, the recycled water-absorbent resins (14) to (18) produced in Examples 14 to 18 exhibited a higher CRC than the recycled water-absorbent resins (1) and (2) for reference, which were produced in Referential Examples 1 and 2.

From the above, it can be understood that since the method for producing a recycled water-absorbent resin according to an embodiment of the present invention is provided with the feature A, recovery of the water absorption performance of the water-absorbent resin contained in a used absorbent article is sufficient, and the water absorption performance of the recycled water-absorbent resin can be suitably improved. It can also be understood that since the method for producing a recycled water-absorbent resin according to an embodiment of the present invention is provided with the feature A, an excessive increase in the costs required for producing a recycled water-absorbent resin can be prevented.

The production conditions for Comparative Example 2 and Examples 19 to 24 are shown in Table 3 below. The results of evaluation of the CRC and vortex (water absorption rate), which are indicators of water absorption performance, of the obtained recycled water-absorbent resin (2) for comparison and the obtained recycled water-absorbent resins (19) to (24) are also shown in Table 3 below. In Comparative Example 2, the water washing step was not implemented. Therefore, in the column of Comparative Example 2 in Table 3, "-" is described in the values for the amount of water used, the extraction liquid electrical conductivity "E1" of the water-absorbent resin washed with water and obtained in the water washing step, and "E1/E0".

[Table 3]

| | | Comparative Example 2 | Example 19 | Example 20 | Example 21 | Example 22 | Example 23 | Example 24 |
|---|---|---|---|---|---|---|---|---|
| Production conditions in acid treatment step | pH of dispersion at end of addition of aqueous hydrochloric acid solution | 1.44 | 1.38 | 1.40 | 1.41 | 1.44 | 1.42 | 1.39 |
| | Addition amount of 6M aqueous hydrochloric acid solution [g] | 13.1 | 13.3 | 13.3 | 13.1 | 13.0 | 12.8 | 12.8 |
| Production conditions in water washing step | Amount of water used [g] | - | 21.5 | 70.0 | 120.0 | 260.0 | 550.0 | 1150 |
| | E0 [mS/cm] | 10.2 | 10.2 | 10.2 | 10.2 | 10.2 | 10.2 | 10.2 |
| | E1 [mS/cm] | - | 6.7 | 3.5 | 2.9 | 2.3 | 1.9 | 1.5 |
| | E1/E0 | - | 0.66 | 0.34 | 0.28 | 0.23 | 0.19 | 0.15 |
| Evaluation results of recycled water-absorbent resin | CRC [g/g] | 46.1 | 46.2 | 47.2 | 47.1 | 47.5 | 47.6 | 47.3 |
| | vortex [sec] | 163 | 124 | 71 | 59 | 52 | 50 | 50 |

As shown in Table 3, in Comparative Example 2 and Examples 19 to 24, similar amounts of the acidic substance were added in the acid treatment step. In Comparative Example 2, the water washing step was not implemented, whereas in Examples 19 to 24, the water washing step was implemented. As compared with the recycled water-absorbent resin (2) for comparison, which was obtained in Comparative Example 2, the recycled water-absorbent resins (19) to (24) obtained in Examples 19 to 24 exhibited an increase in CRC value and a significant decrease in vortex value. Here, a significant decrease in the vortex value means that the water absorption rate is improved. The production methods in Examples 19 to 24 correspond to the method for producing a recycled water-absorbent resin according to an embodiment of the present invention, whereas the production method in Comparative Example 2 does not correspond to the method for producing a recycled water-absorbent resin according to an embodiment of the present invention.

Production of Recycled Water-Absorbent Resin through Successive Implementation of Acid Treatment Step, Water Washing Step, and Neutralization Step

Example 25

A water-absorbent resin (1) treated with a polyvalent metal salt, i.e., a water-absorbent resin gel after the dehydration step was obtained by carrying out the same operation as in Production Example 1. 1000 g of the obtained water-absorbent resin (1) treated with the polyvalent metal salt was mixed with 1300 g of deionized water to prepare a dispersion (18) having a solid content concentration of 6.3 wt.%. The dispersion (18) was an aqueous dispersion of the water-absorbent resin gel after the dehydration step.

The dispersion (18) was fed at a feed rate of 43.0 g/min to a reaction processor equipped with a pH meter and a stirrer and further provided with a raw material feed port and a discharge port positioned on the side opposite the raw material feed port in order to enable continuous treatment, and simultaneously therewith, 1.1 wt.% hydrochloric acid was fed at a feed rate of 95.1 g/min to thereby carry out an acid reaction. As a result, a dispersion (19), which was a dispersion of the water-absorbent resin gel after the acid reaction step, was obtained in the reaction processor. Ten minutes after the startup of feeding of the dispersion (18) and 1.1 wt.% hydrochloric acid as raw materials into the reaction processor through the feed port of the reaction processor, the numerical value of the pH meter was confirmed to be 1.21. Next, the dispersion (19) was continuously extracted for 20 minutes from the discharge port of the reaction processor. The extracted dispersion (19) was sampled, and the extraction liquid electrical conductivity E0 thereof was measured. The obtained extraction liquid electrical conductivity of the sampled dispersion (19) corresponds to the extraction liquid electrical conductivity of the water-absorbent resin treated with the acidic substance. The value of the extraction liquid electrical conductivity E0 obtained as a result of the measurement thereof was 11.1 mS/cm. Subsequently, the extracted dispersion (19) was continuously fed to a water washing tank at a feed rate of 43.0 g/min, and at the same time, deionized water was continuously fed as a washing water at a feed rate of 380 g/min. Thus, the water-absorbent resin gel after the acid reaction step and contained in the dispersion (19) was continuously washed, whereby a water-washed product was obtained. The obtained water-washed product was subjected to filtration and collection using a 100-mesh stainless steel wire net for 20 minutes, whereby a water-absorbent resin gel (25) subjected to the washing step was obtained. The numeric value reading of the pH meter was kept within a range of 1.20 ± 0.10 for 20 minutes while the dispersion (19) was extracted from the reaction processor. The extraction liquid electrical conductivity E1 of the water-absorbent resin gel (25) after the washing step was 3.3, and E1/E0 was 0.30. The water-absorbent resin gel (25) after the washing step was a water-absorbent resin washed with water, and the extraction liquid electrical conductivity of the water-absorbent resin gel (25) after the washing step corresponds to the extraction liquid electrical conductivity of the water-absorbent resin washed with water. The solid content concentration of the obtained water-absorbent resin gel (25) after the washing step was measured and found to be 10.1 wt.%. Here, the solid content concentration was calculated from the following equation: solid content concentration (wt.%) = 100 - water content (wt.%).

The water-absorbent resin gel (25) subjected to the washing step was continuously fed to a meat chopper at a feed rate of 170 g/min, and at the same time, sodium carbonate powder was continuously fed to the meat chopper at a feed rate of 8.8 g/min. Next, in the meat chopper, the water-absorbent resin gel (25) subjected to the washing step and the sodium carbonate powder were kneaded, and the water-absorbent resin gel (25) after the washing step was subjected to a neutralization reaction, whereby a water-absorbent resin gel (25) subjected to a neutralization step was obtained.

The obtained water-absorbent resin gel (25) subjected to the neutralization step was spread on a stainless steel tray and dried for 60 minutes in a hot-air circulating oven set to 180°C, whereby a water-absorbent resin (25) subjected to a drying step was obtained. The water-absorbent resin (25) subjected to the drying step was defined as a recycled water-absorbent resin (25).

The recycled water-absorbent resin (25) had a CRC of 48.5 (g/g) and a vortex (water absorption rate) of 62 (sec).

As described above, it was found that even when the reactions in the steps for forming the recycled water-absorbent resin of the present invention are carried out continuously, a recycled water-absorbent resin having excellent water absorption performance can be obtained, similar to the case of batch reactions.

From the above, it can be understood that the method for producing a recycled water-absorbent resin according to an embodiment of the present invention, which includes the water washing step, can improve the water absorption performance, and particularly the water absorption rate, of the obtained recycled water-absorbent resin.

In addition, in Examples 20 to 25, the water washing step was implemented so that the value of E1/E0 was less than 0.40, whereas in Example 19, the value of E1/E0 in the water washing step exceeded 0.40. As compared with the recycled water-absorbent resin (19) obtained in Example 19, the recycled water-absorbent resins (20) to (25) obtained in Examples 20 to 25 had slightly larger CRC values and smaller vortex (water absorption rate) values.

From the above, it can be understood that, in the method for producing a recycled water-absorbent resin according to an embodiment of the present invention, when a water washing step is carried out to wash the acidic substance-treated water-absorbent resin with water so that the value of E1/E0 is less than 0.40, the water absorption performance, and particularly the water absorption rate, of the obtained recycled water-absorbent resin can be more significantly improved.

Industrial Applicability

According to one embodiment of the present invention, a recycled water-absorbent resin for which the water absorption performance such as water absorbency is further restored, and which more closely approaches, in terms of the water absorption performance such as water absorbency, a water-absorbent resin contained in an absorbent article prior to use can be produced from the water-absorbent resin contained in the used absorbent article. Therefore, one embodiment of the present invention can be used to recycle, from a used absorbent article, a water-absorbent resin for which the water absorption performance has been sufficiently restored.

**Claims**

1. A method for producing a recycled water-absorbent resin from a water-absorbent resin contained in a used absorbent article,

the water-absorbent resin containing a polymer having partially neutralized carboxyl groups, and
the method comprising:

a dehydration step (1) of treating the water-absorbent resin with a polyvalent metal salt;
an acid treatment step (2) of treating, with an acidic substance, the water-absorbent resin treated with the polyvalent metal salt;
a water washing step (3) of washing with water the water-absorbent resin treated with the acidic substance;
a neutralization step (4) of neutralizing, with an alkali metal salt, the water-absorbent resin washed with water; and
a drying step (5) of drying the water-absorbent resin neutralized with the alkali metal salt and thereby producing a recycled water-absorbent resin.

2. The method for producing a recycled water-absorbent resin according to claim 1, wherein the acid treatment step (2), the water washing step (3), and the neutralization step (4) are implemented so that a washing degree represented by Equation (1) is 10 or higher:

washing degree = {(gel concentration of dispersion before water washing step)/(gel concentration of dispersion during acid treatment step)} × {(gel concentration of dispersion before neutralization step)/(gel concentration of dispersion during water washing step)} (1).     (1).

3. The method for producing a recycled water-absorbent resin according to claim 1 or 2, wherein the acid treatment step (2) includes a step of adding the acidic substance to a dispersion of the water-absorbent resin treated with the polyvalent metal salt so that the pH of the dispersion is from -1.0 to 3.0.

4. The method for producing a recycled water-absorbent resin according to any one of claims 1 to 3, wherein, in the dehydration step (1),
the polyvalent metal salt is a salt of an alkaline earth metal.

5. The method for producing a recycled water-absorbent resin according to any one of claims 1 to 4, wherein, in the acid treatment step (2),
the acidic substance is one or more acids selected from the group consisting of an organic acid and an inorganic acid.

6. The method for producing a recycled water-absorbent resin according to any one of claims 1 to 5, wherein

the water washing step (3) includes a step of washing with water the water-absorbent resin treated with the acidic substance so that a ratio ($E1/E0$) of an extraction liquid electrical conductivity $E1$ of the water-absorbent resin washed with water and obtained in the water washing step (3) to an extraction liquid electrical conductivity $E0$ of the water-absorbent resin treated with the acidic substance and obtained in the acid treatment step (2) is less than 0.40
(in the acid treatment step (2) or the water washing step (3), when the water-absorbent resin is obtained in a state of being present in a dispersion, the extraction liquid electrical conductivity of the water-absorbent resin is measured by a method including steps (i) to (iii) described below:

(i) a step of obtaining a filtered water-absorbent resin by implementing an operation of using a 100-mesh wire net to filter the dispersion of the water-absorbent resin obtained in the acid treatment step (2) or the water washing step (3) and leaving the filtered product for 1 minute;
(ii) a step of obtaining an extraction liquid by adding the filtered water-absorbent resin obtained in step (i) and deionized water having a weight four times the weight of the filtered water-absorbent resin to a beaker, and stirring the mixture with a stirrer at a temperature of 25°C for 20 minutes; and
(iii) a step of measuring, with an electrical conductivity meter, the electrical conductivity of the extraction liquid obtained in step (ii);

in the acid treatment step (2) or the water washing step (3), when the water-absorbent resin is obtained in a state of being removed from the dispersion, the extraction liquid electrical conductivity of the water-absorbent resin is measured by a method including steps (iv) and (v) described below:

(iv) a step of obtaining an extraction liquid by adding the water-absorbent resin obtained in the acid treatment step (2) or the water washing step (3) and deionized water having a weight four times the weight of the water-absorbent resin to a beaker, and stirring the mixture with a stirrer at a temperature of 25°C for 20 minutes; and
(v) a step of measuring, with an electrical conductivity meter, the electrical conductivity of the extraction liquid obtained in step (iv)).

7. The method for producing a recycled water-absorbent resin according to any one of claims 1 to 6, wherein a water content of the recycled water-absorbent resin is from 5 to 30 wt.%.

8. The method for producing a recycled water-absorbent resin according to any one of claims 1 to 7, wherein the water used in the water washing step (3) is water having an electrical conductivity of 50 mS/cm or less.

9. A method for determining production conditions in a method for producing a recycled water-absorbent resin from a water-absorbent resin contained in a used absorbent article,

the water-absorbent resin containing a polymer having partially neutralized carboxyl groups,
the method for producing a recycled water-absorbent resin including:

a dehydration step (1) of treating the water-absorbent resin with a polyvalent metal salt;
an acid treatment step (2) of treating, with an acidic substance, the water-absorbent resin treated with the polyvalent metal salt;
a water washing step (3) of washing with water the water-absorbent resin treated with the acidic substance;
a neutralization step (4) of neutralizing, with an alkali metal salt, the water-absorbent resin washed with water; and
a drying step (5) of drying the water-absorbent resin neutralized with the alkali metal salt and thereby producing a recycled water-absorbent resin, and
the method for determining production conditions in the method for producing a recycled water-absorbent resin comprising determining an end point of the acid treatment step (2) on the basis of a pH of a dispersion of the water-absorbent resin treated with the polyvalent metal salt and containing the acidic substance added during the acid treatment step (2).

10. The method for determining production conditions according to claim 9, further comprising determining an end point of the water washing step (3) on the basis of a ratio (E1/E0) of an extraction liquid electrical conductivity E1 of the water-absorbent resin washed with water and obtained in the water washing step (3) to an extraction liquid electrical conductivity E0 of the water-absorbent resin treated with the acidic substance and obtained in the acid treatment step (2)

(in the acid treatment step (2) or the water washing step (3), when the water-absorbent resin is obtained in a state of being present in a dispersion, the extraction liquid electrical conductivity of the water-absorbent resin is measured by a method including steps (i) to (iii) described below:

(i) a step of obtaining a filtered water-absorbent resin by implementing an operation of using a 100-mesh wire net to filter the dispersion of the water-absorbent resin obtained in the acid treatment step (2) or the water washing step (3) and leaving the filtered product for 1 minute;
(ii) a step of obtaining an extraction liquid by adding the filtered water-absorbent resin obtained in step (i) and deionized water having a weight four times the weight of the filtered water-absorbent resin to a beaker, and stirring the mixture with a stirrer at a temperature of 25°C for 20 minutes; and
(iii) a step of measuring, with an electrical conductivity meter, the electrical conductivity of the extraction liquid obtained in step (ii);

in the acid treatment step (2) or the water washing step (3), when the water-absorbent resin is obtained in a state of being removed from the dispersion, the extraction liquid electrical conductivity of the water-absorbent resin is measured by a method including steps (iv) and (v) described below:

(iv) a step of obtaining an extraction liquid by adding the water-absorbent resin obtained in the acid treatment step (2) or the water washing step (3) and deionized water having a weight four times the weight of the water-absorbent resin to a beaker, and stirring the mixture with a stirrer at a temperature of 25°C for 20 minutes; and (v) a step of measuring, with an electrical conductivity meter, the electrical conductivity of the extraction liquid obtained in step (iv)).

FIG. 1

CONCENTRATION:
10%

SOLVENT
REMOVAL

CONCENTRATION:
20%

ADDITION OF
WASHING
WATER

CONCENTRATION:
5%

SOLVENT
REMOVAL

CONCENTRATION:
20%

WASHING DEGREE = 20%/10% × 20%/5% = 8

CONCENTRATION:
10%

WITHOUT
SOLVENT
REMOVAL

CONCENTRATION:
10%

ADDITION OF
WASHING
WATER

CONCENTRATION:
5%

SOLVENT
REMOVAL

CONCENTRATION:
20%

WASHING DEGREE = 10%/10% × 20%/5% = 4

DURING ACID
TREATMENT
STEP

BEFORE WATER
WASHING
STEP

DURING WATER
WASHING
STEP

BEFORE
NEUTRALIZATION
STEP

# FIG. 2

## INTERNATIONAL SEARCH REPORT

| International application No. |
| --- |
| **PCT/JP2023/046205** |

**A. CLASSIFICATION OF SUBJECT MATTER**

***B01J 20/34***(2006.01)i; ***B01J 20/26***(2006.01)i; ***B01J 20/30***(2006.01)i; ***B09B 3/00***(2022.01)i; ***B09B 3/70***(2022.01)i; ***B29B 17/02***(2006.01)i; *B09B 101/67*(2022.01)n

FI:  B01J20/34 G; B09B3/00; B01J20/26 D; B29B17/02; B09B3/70 ZAB; B01J20/30; B09B101:67

According to International Patent Classification (IPC) or to both national classification and IPC

**B. FIELDS SEARCHED**

Minimum documentation searched (classification system followed by classification symbols)

  B01J20/34; B01J20/26; B01J20/30; B09B3/00; B09B3/70; B29B17/02; B09B101/67

Documentation searched other than minimum documentation to the extent that such documents are included in the fields searched

  Published examined utility model applications of Japan 1922-1996
  Published unexamined utility model applications of Japan 1971-2024
  Registered utility model specifications of Japan 1996-2024
  Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2003-225645 A (WADA, Tomio) 12 August 2003 (2003-08-12) paragraphs [0016]-[0048] | 1-2, 4-8 |
| Y | | 3, 9 |
| A | | 10 |
| Y | JP 2016-000881 A (UNI-CHARM CO., LTD.) 07 January 2016 (2016-01-07) paragraph [0018] | 3, 9 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 March 2024** | **26 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/046205**

| Patent document cited in search report | | | Publication date (day/month/year) | Patent family member(s) | | | Publication date (day/month/year) |
|---|---|---|---|---|---|---|---|
| JP | 2003-225645 | A | 12 August 2003 | (Family: none) | | | |
| JP | 2016-000881 | A | 07 January 2016 | US | 2017/0107667 | A1 | |
| | | | | paragraph [0050] | | | |
| | | | | WO | 2015/190140 | A1 | |
| | | | | EP | 3156541 | A1 | |
| | | | | CN | 106460327 | A | |

Form PCT/ISA/210 (patent family annex) (July 2022)

**REFERENCES CITED IN THE DESCRIPTION**

**Patent documents cited in the description**

- JP 2013150976 A
- JP 2003225645 A
- JP 2003326161 A
- JP 2013198862 A
- JP 2019135046 A